# FASCICULE DE BREVET EUROPEEN

(11) **EP 4 219 230 B1**
(45) Date de publication et mention de la délivrance du brevet: **30.10.2024**
(21) Numéro de dépôt: 23151087.6
(22) Date de dépôt: 11.01.2023
(51) Int. Cl.: B60N 2/225

(54) **EQUIPEMENT DE RÉGLAGE DE L'INCLINAISON D'UN DOSSIER PAR RAPPORT À UNE ASSISE D'UN SIÈGE**
VORRICHTUNG ZUR EINSTELLUNG DER NEIGUNG EINER RÜCKENLEHNE GEGENÜBER EINEM SITZTEIL EINES SITZES
EQUIPMENT FOR ADJUSTING THE INCLINATION OF A BACKREST WITH RESPECT TO A SEAT CUSHION OF A SEAT

(30) Priorité: 31.01.2022 FR 2200823
(43) Date de publication de la demande: 02.08.2023
(73) Titulaire: FAURECIA Sièges d'Automobile, 92000 Nanterre (FR)
(72) Inventeur: LEGRAS, Cédric, 61100 La Lande Patry (FR); LECONTE, Sébastien, 61100 Flers (FR)
(74) Mandataire: Plasseraud IP

(56) Documents cités:
- DE-A1- 102008 028 086
- FR-A1- 3 026 995
- GB-A- 2 423 701

## Description

La présente divulgation est relative à un équipement de réglage de l'inclinaison d'un dossier par rapport à une assise d'un siège comprenant un ou plusieurs mécanismes d'articulation continue, ainsi qu'un dispositif de commande de verrouillage, externe au(x) mécanisme(s) d'articulation, configuré pour assurer la commande du (des) mécanisme(s) d'articulation, ainsi que son irréversibilité.

### Domaine technique

La présente divulgation relève du domaine des dispositifs de réglage de l'inclinaison d'un dossier de siège de véhicule, par rapport à l'assise, et de blocage, et plus particulièrement de tels dispositifs comportant un mécanisme d'articulation continue.

### Technique antérieure

Il est connu, par exemple des documents US 5.874.747 A, FR 2.902.375 B1, US 8.985.887 B2, ou encore DE102011051837, des dispositifs de réglage de l'inclinaison du dossier par rapport à une assise, reposant notamment sur un mécanisme d'articulation continue.

Un mécanisme d'articulation continue assure le réglage continu de l'inclinaison du dossier par rapport à l'assise et comprend typiquement, tel qu'enseigné par les documents précités, deux flasques destinés à être fixés respectivement à l'assise et au dossier, typiquement articulés l'un à l'autre par un train d'engrenage hypocycloïdal.

Un tel engrenage hypocycloïdal comporte une première couronne dentée, externe, centrée sur un premier axe et formée sur l'un des deux flasques, en prise avec une deuxième couronne dentée interne, centrée sur un deuxième axe, coaxial à un arbre de commande (ci-après désigné tige de commande), la deuxième couronne formée sur l'autre des deux flasques. Le deuxième axe est parallèle au premier axe et décalé par rapport au premier axe par un mécanisme à excentrique de l'engrenage.

Le mécanisme d'excentrique coopère avec un organe d'entrée, couplé à la tige de commande (constituée par un arbre de section carrée), l'organe d'entrée monté tourillonnant au travers des deux flasques, interne au mécanisme d'articulation, le mécanisme d'excentrique comportant par exemple une came formant noyau et des segments de coin, réduisant le jeu de la came, et tel que par exemple divulgué par FR 2.902375 B1.

Le document FR 2.902375 B1 répond au problème de la réversibilité de ce type de mécanisme à articulation continue en ce qu'il peut être constaté que des sollicitations répétées appliquées sur le dossier parviennent à provoquer une modification du comportement du mécanisme avec le temps, et en particulier une rotation non souhaité du mécanisme d'excentrique, et ainsi une rotation relative entre les deux flasques de l'articulation, aboutissant à un changement non souhaité de l'inclinaison du dossier. Ceci est particulièrement constaté lorsque le dossier est fortement chargé, ou/ou lorsque présente une inclinaison importante avec l'assise

Afin de résoudre ce problème, le document FR 2.902375 B1 enseigne un élément de blocage, interne au mécanisme d'articulation, qui empêche la rotation du mécanisme à excentrique, par coincement. Dans le cas d'une sollicitation sur le dossier, la coopération d'une rampe du mécanisme à excentrique (amené à pivoter de manière non souhaitée sous de la sollicitation du dossier) et de la rampe de l'élément de blocage engendre une effort radial pressant l'élément de blocage contre l'un des flasques pour le bloquer par frottement, ce qui bloque à son tour la came excentrique et ainsi l'engrenage hypocycloïdal.

Lorsque l'utilisateur souhaite régler l'inclinaison du dossier par rapport à l'assise du siège, il agit sur une poignée de manoeuvre (non illustrée) qui entraîne la rotation de la tige de commande, et de l'organe d'entrée lié en rotation à la tige de commande. L'organe d'entrée comporte des doigts de commande, avec un doigt qui vient tout d'abord pousser un segment de coin en le rapprochant de l'autre segment de coin, afin de laisser un léger jeu à la came du mécanisme d'excentrique, puis un doigt vient contre un épaulement de la came pour entraîner sa rotation, ce qui tend à écarter la rampe de la came et la rampe de l'élément de blocage en libérant le coincement, pour ensuite permettre les rotations simultanées de la came et de l'élément de blocage, entraînés par l'organe d'entrée.

Une telle solution répond au problème de la réversibilité du mécanisme d'articulation par blocage du mécanisme d'excentrique contre l'un des flasques : il s'agit d'une solution de blocage, interne au mécanisme d'articulation qui doit donc être intégrée dans chaque mécanisme d'articulation lorsque le siège comporte plusieurs mécanismes d'articulation, commandés par une même tige de commande en liaison avec l'ensemble des organes d'entrée des différents mécanismes d'articulation. Une telle solution de blocage, interne, doit être intégrée dans tous les mécanismes d'articulation continue, ce qui grève le coût de l'équipement comportant plusieurs mécanismes d'articulation. A défaut de prévoir une telle solution de blocage, interne, dans tous les mécanismes d'articulation, une sollicitation sur le dossier peut entraîner la rotation non souhaitée du mécanisme d"excentrique du mécanisme dépourvu d'organe de blocage ce qui entraînera à son tour la rotation non souhaitée de l'organe d'entrée et conjointement de la tige de commande. La rotation non souhaitée de la tige de commande a pour conséquence de déverrouiller à son tour les systèmes de blocage internes des autres mécanismes d'articulation, même s'ils sont pourvus d'une solution de blocage interne parfaitement opérationnelle.

Un autre défaut d'une telle solution de blocage, interne au mécanisme d'articulation est sa fiabilité, en particulier lorsque plusieurs mécanismes d'articulation sont liés par une même tige de commande. Un équipement de réglage de l'inclinaison d'un dossier par rapport à une assise comprend typiquement au moins deux mécanismes d'articulation par siège, avec un premier mécanisme d'articulation, droite, et un deuxième mécanisme d'articulation, gauche, un premier organe d'entrée gauche du premier mécanisme d'articulation et un deuxième organe d'entrée, droite du mécanisme d'articulation couplé en rotation par une même barre de commande s'étendant transversalement. En effet, un défaut de fonctionnement de la solution de blocage interne, de l'un seulement des mécanismes d'articulation, peut être à l'origine d'un changement non souhaité de l'inclinaison du dossier, typiquement un affaissement de dossier fortement chargé, ou fortement incliné, en ce qu'une rotation non souhaitée de la tige de commande provoquée par le mécanisme défectueux peut déclencher le déblocage des solutions de blocage internes de l'ensemble des autres mécanismes d'articulation liés à la même tige de commande, même s'ils sont non défectueux.

Le document KR10-1914096 est un autre exemple de solution de blocage, interne, au(x) mécanisme(s) d'articulation, et qui présentent donc les inconvénients précités.

On connaît toutefois de l'état de la technique des dispositifs de commande et de verrouillage à frein externe, tels qu'enseigné par DE 102008028086 A1, à savoir que la solution de freinage est externe au(x) mécanismes d'articulation continue. Une telle solution de blocage selon DE 102008028086 A1 est une solution externe au mécanisme d'articulation, et qui comporte :
- un premier organe suiveur, couplé en rotation par un trou carré à une tige de commande, de section carrée,
- une deuxième organe entraîneur (« driver ») configuré être déplacé selon une course angulaire limitée par rapport au premier organe, pour entraîner le premier organe suiveur, en une première fin de course selon un premier sens de rotation et en une deuxième fin de course selon un deuxième sens de rotation .

Dans une position de repos, intermédiaire entre le deuxième organe et le premier organe, le premier organe suiveur est plaqué par un ressort de compression contre un support fixe, dans une position de blocage pour laquelle des dents du premier organe suiveur viennent engager avec des dents du support fixe, immobilisant ainsi la rotation dudit premier organe suiveur, et ainsi la rotation de la tige de commande.

Des cames sont prévues entre le deuxième organe entraîneur, d'une part, et le premier organe suiveur, d'autre part, configurées, dans la première ou dans deuxième fin de course, pour déplacer le premier organe, suiveur, axialement, le long de la tige de commande, contre la force du ressort afin de permettre de dégager les dents du premier organe suiveur des dents du support fixe, libérant ainsi la rotation de la tige de commande.

Le blocage ou le déblocage de la rotation de la tige de commande est donc obtenu par coulissement du premier organe, suiveur directement, le long de la tige de commande.

Selon les constatations des inventeurs, si une telle solution de frein, externe au mécanisme d'articulation, permet de répondre à certains des problèmes identifiés précédemment pour les solutions de freins internes, la solution enseignée par DE 102008028086 présente toutefois certains inconvénients, et en particulier :
- des vibrations et donc du bruit : l'organe suiveur couplé en rotation à la tige de commande, doit selon le principe de fonctionnement de DE 102008028086, pouvoir coulisser entre deux positions extrêmes sur la tige de commande pour bloquer la rotation de la tige de commande, ou au contraire libérer la tige de commande, ce qui implique la présence d'un jeu de fonctionnement entre l'évidemment de section carrée dudit premier organe et la tige de commande, de section carrée, pour autoriser un tel coulissement ; un tel jeu donnera inévitablement, lors de sollicitations en vibrations du système, un bruit entre l'organe suiveur et la tige de commande, typiquement creuse et métallique,
- défaut de fiabilité, en particulier en ce que le ressort de compression est plaqué entre deux surfaces amenées à tourner l'une par rapport à l'autre autour de l'axe de la tige de commande, à savoir entre une surface du premier organe suiveur lié à la tige de commande et une surface opposée du deuxième organe, configurée pour pivoter par rapport au premier organe autour de l'axe de la tige de commande, ce mouvement relatif augmentant les risques de défaillance par accroche du ressort
- une difficulté de montage : le dispositif selon DE102008088086 nécessite tout d'abord d'assembler un premier sous-ensemble comprenant le premier organe suiveur, le ressort, et le deuxième organe suiveur, en insérant le premier organe suiveur dans le deuxième organe en comprimant le ressort, puis en effectuant un quart de tour du premier organe par rapport au deuxième organe, ce qui complexifie le montage ;
- un encombrement hors tout non négligeable : les dents de blocages sont réparties entre deux éléments plastiques, ce qui suppose une hauteur de dents relativement importante de 3 à 5 millimètres : la course de déplacement suivant l'axe de la tige de commande pour permettre de libérer ou déverrouiller n'est pas négligeable ce qui augmente l'encombrement du dispositif de verrouillage et de commande selon l'axe de la tige de commande.

Le document FR 3026995 A1 montre un autre exemple de l'art antérieur d'un équipement de réglage de l'inclinaison d'un dossier par rapport à une assise d'un siège.

### Résumé

La présente divulgation vient améliorer la situation.

Il est proposé un équipement de réglage de l'inclinaison d'un dossier par rapport à une assise d'un siège comprenant un ou plusieurs mécanisme d'articulation continue, ledit ou chaque mécanisme d'articulation comprenant :
- un premier flasque et un deuxième flasque configurés pour être solidaires respectivement de l'assise et du dossier et selon une première possibilité, ou inversement solidaires respectivement du dossier et de l'assise selon une seconde possibilité,
- un organe d'entrée, monté rotatif, configuré pour être déplacé dans un premier sens de rotation, et dans un deuxième sens de rotation, et provoquer le déplacement du deuxième flasque par rapport au premier flasque, et dans lequel ledit organe d'entrée du mécanisme d'articulation, ou lesdits organes d'entrée des mécanismes d'articulation sont entraînés par une tige de commande, couplée en rotation avec l'organe d'entrée du mécanisme d'articulation, ou lesdits organes d'entrée des mécanismes d'articulation, la tige de commande montée pivotante autour d'un axe longitudinal de la tige,
   et dans lequel ledit équipement comprend un dispositif de commande et de verrouillage, externe au(x) mécanisme(s) d'articulation, configuré pour assurer la commande du ou des mécanismes d'articulation lors du changement d'inclinaison du dossier par rapport à l'assise, et l'irréversibilité du ou des mécanismes articulation par blocage en rotation de la tige de commande lorsque le dispositif de commande et de verrouillage est non actionné, le dispositif de commande et de verrouillage comprenant :
- un premier organe, suiveur, solidaire en rotation de la tige de commande, et un deuxième organe, entraîneur, monté pivotant selon une course angulaire limitée par rapport au premier organe autour de la tige de commande,
   et dans lequel ledit premier organe et le deuxième organe comprennent des premiers moyens de butée configurés pour assurer l'entraînement en rotation du premier organe, suiveur, par le deuxième organe, entraîneur, selon le premier sens de rotation, en une première fin de course de rotation du deuxième organe de commande par rapport au premier organe, et des deuxièmes moyens de butée configurés pour assurer l'entraînement en rotation du premier organe, suiveur, par le deuxième organe, entraîneur, selon le deuxième sens de rotation, en une deuxième fin de course du deuxième organe de commande par rapport au premier organe de commande,
- des moyens élastiques contraignant le deuxième organe en rotation par rapport au premier organe dans une position de repos, intermédiaire entre la première fin de course et la deuxième fin de course
- un élément bloqueur solidaire en rotation du premier organe, autour de l'axe de la tige de commande, déplaçable par rapport au premier organe selon une direction axiale à l'axe de la tige de commande suivant des moyens de guidage entre ledit élément bloqueur et le premier organe, ledit élément bloqueur étant configuré pour venir se verrouiller sur un support fixe, fixe par rapport au premier flasque selon la première possibilité, ou sur un support fixe, fixe par rapport au deuxième flasque selon la seconde possibilité, dans une position de blocage de l'élément bloqueur, sous l'action d'une force de rappel de moyens ressorts afin d'assurer l'immobilisation en rotation de la tige de commande dans la position de repos du deuxième organe par rapport au premier organe,
- des moyens de came entre le deuxième organe et ledit élément bloqueur, configurés pour déplacer ledit élément bloqueur, axialement contre la force de rappel des moyens ressort, depuis la position de blocage jusqu'à au moins une position escamotée pour laquelle ledit élément bloqueur est écarté du support fixe , au moins partiellement, libérant la rotation de la tige de commande au moins dans le sens de rotation imposé par le deuxième organe, entraîneur, ledit élément bloqueur étant escamoté axialement, lorsque le deuxième organe et le premier organe sont dans la première position de fin de course, lorsque entraînés selon le premier sens de rotation, et lorsque le deuxième organe et le premier organe sont dans la deuxième position de fin de course, lorsque entraînés, selon le deuxième sens de rotation.

Selon un mode de réalisation (illustré aux figures), les moyens ressort contraignant (directement) en translation ledit élément bloqueur dans sa position de blocage et les moyens élastiques contraignant (au moins indirectement) en rotation le deuxième organe par rapport au premier organe dans sa position de repos intermédiaire peuvent être constitués par un même organe ressort. Selon un autre mode de réalisation (non illustré), il peut être envisagé d'utiliser des organes ressort/élastique distincts.

Les caractéristiques exposées dans les paragraphes suivants peuvent, optionnellement, être mises en oeuvre. Elles peuvent être mises en oeuvre indépendamment les unes des autres ou en combinaison les unes avec les autres :
- le support fixe comprend une ouverture, centrée autour de l'axe longitudinale de la tige de commande, ladite ouverture pourvue sur un diamètre interne d'une pluralité de dents contre lesquelles l'organe bloqueur vient se verrouiller suivant différentes positions angulaires de verrouillage discontinues définies par les dents, autour de l'axe de la tige de commande, dans ladite position de blocage ; par dents, on entend des reliefs en saillie, répartis sur le diamètre interne de l'ouverture du support fixe, contre lesquels l'organe de verrouillage peut se verrouiller, sans glissement possible, et notamment quel que soit le profil de la dent : le profil des dents peut à titre d'exemple être de profil triangulaire, trapézoïdal, rectangulaire (en créneaux), arrondie...
- la pluralité de dents formées sur la diamètre interne de l'ouverture forment une couronne dentée interne, avec une denture orientée intérieurement vers l'axe de la tige de commande, ledit élément bloqueur comprend une couronne dentée externe comprenant avec une denture orientée extérieurement ;
- la hauteur de la denture, suivant la direction axiale à la tige de commande est comprise entre 1 mm et 2 mm, et de sorte que la course axiale dudit élément bloqueur entre la position de blocage et la position escamotée est inférieure à 3 mm, voire inférieure à 2mm ;
- le premier organe comprend une ouverture de section non circulaire complémentaire à la section de la tige de commande, configurée pour assurer un couplage en rotation du premier organe avec la tige de commande : de manière notable le premier organe peut être monté en ajustement serré sur la tige de commande ;
- ledit élément bloqueur est un corps, centré sur l'axe de la tige de commande, présentant une ouverture centrale traversée par une portée externe de guidage formée le premier organe suiveur, ladite portée externe de guidage comprenant, suivant l'axe de la tige de commande, lesdits moyens de guidage comprenant des premières parties réparties sur la périphérie de la portée externe de guidage, orientées en longueur suivant la direction axiale, en relief sur la circonférence de la portée, et coopérant au guidage, avec des deuxièmes parties en relief complémentaire sur la périphérie intérieure dudit élément bloqueur, de sorte à assurer un guidage en translation dudit élément bloqueur par rapport audit premier organe suivant la direction axiale, ainsi qu'un couplage en rotation dudit élément bloqueur par rapport au premier organe autour de l'axe de la tige de commande ;
- les premières parties des moyens de guidage comprenant des nervures parallèles entre elles, réparties sur la circonférence de la portée externe de guidage et les deuxièmes parties mutuellement engageantes comprennent des rainures sur la périphérie intérieure de l'élément bloqueur ;
- les moyens ressort comprennent un organe ressort circulaire, traversé par ladite portée externe de guidage comprimé entre, d'une part, une face d'arrêt d'un épaulement s'étendant radialement au-delà d'un diamètre externe de la portée externe de guidage formée sur le premier organe, et d'autre part, une première paroi dudit élément bloqueur, tournée vers la face d'arrêt ;
- l'épaulement formant la face d'arrêt, d'une part, et la portée externe de guidage dudit premier organe dit première portée externe de guidage, d'autre part, sont suivis d'une seconde portée externe de guidage dudit premier organe, cylindrique, en prolongement de la première portée externe de guidage, ladite seconde portée externe de guidage étant configurée pour coopérer avec une portée de guidage, interne formée sur une ouverture centrale dudit deuxième organe, pour assurer le guidage en rotation dudit deuxième organe par rapport au première organe selon la course angulaire limitée, autour de l'axe de la tige de commande ;
- au moins en partie des nervures s'étendent, suivant la direction axiale de la tige de commande, jusqu'à leur extrémité distale jusqu'à la zone de jonction entre, d'une part, la première portée externe de guidage et la seconde portée externe de guidage, lesdites nervures terminées à leur extrémité distales par des faces d'arrêt coopérant en butée avec une paroi interne du second organe en maintenant un écartement défini, entre la face d'arrêt dudit épaulement du premier orage organe, d'une part, et ladite paroi interne dudit second organe tournée vers la face d'arrêt ;
- une bague de retenue est fixée sur la seconde portée externe de guidage, configuré pour coopérer en butée avec une face externe du deuxième organe ;
- les moyens de came comprennent au moins un couple de cames portées par ledit élément bloqueur et un suiveur de came porté par ledit deuxième organe , ou inversement, le ou chaque couple de came comprenant une première came formant une rampe configurée pour coopérer avec ledit suiveur de came en assurant le déplacement dudit élément bloqueur de la position de blocage jusqu'à la position escamotée dans la première fin de course entre le deuxième organe et ledit première organe, et une deuxième came formant une rampe configurée pour coopérer avec ledit suiveur de came en assurant le déplacement dudit élément bloqueur de la position de blocage jusqu'à la position escamotée dans la deuxième fin de course entre le deuxième organe et ledit première organe ;
- ledit suiveur de came se trouve dans une position intermédiaire entre la première came et la deuxième came dans la position de repos du deuxième organe par rapport au premier organe, l'organe ressort circulaire formant non seulement, lesdits moyens ressort contraignant le déplacement dudit élément bloqueur de la position escamotée jusqu'à la position de blocage, mais également les moyens élastiques, contraignant le déplacement du deuxième organe par rapport au première organe, depuis la première fin de course jusqu'à la position de repos par le travail du suiveur de came avec la première came et en contraignant le déplacement du deuxième organe par rapport au première organe, depuis la deuxième fin de course jusqu'à la position de repos par le travail du suiveur de came avec la deuxième came ;
- le suiveur de came peut être porté par le deuxième organe, et ledit au moins un couple de came par ledit élément bloqueur et dans lequel les premiers moyens de butée limitant le déplacement du deuxième organe par rapport au premier organe dans le premier sens de rotation comprennent une première d'une face d'arrêt du suiveur de came, configurée pour venir en buté contre une des nervures à une extrémité distale de la rampe formant la première came
   et dans lequel les seconds moyens de butée limitant le déplacement du deuxième organe par rapport au premier organe dans le deuxième sens de rotation comprennent un deuxième surface d'arrêt du suiveur de came, configurée pour venir en buté contre une des nervures à une extrémité distale de la rampe formant la deuxième came.

Selon un mode de réalisation, le première organe et le deuxième organe forment un boîtier logeant ledit organe bloqueur et lesdits moyens ressort et dans lequel support fixe est un élément mince, intercalé entre le premier élément et le deuxième élément : le dispositif de commande et de verrouillage comprend :
- des moyens de centrage dudit support fixe par rapport à l'axe de la tige de commande, comprenant des surfaces de guidage cylindriques, entre ledit support fixe, d'une part, et ledit premier organe et/ ou ledit deuxième organe, d'autre part,
- des moyens d'immobilisation dudit support fixe, par rapport à l'ensemble premier organe et deuxième organe ledit support fixe, intercalé entre le premier élément et le deuxième élément maintenu en des surfaces d'arrêt opposées appartenant respectivement au deuxième et premier organe afin d'assurer l'arrêt du support fixe par rapport audit ensemble suivant la direction axiale de la tige de commande.

Selon un mode de réalisation, le mécanisme d'articulation est un mécanisme d'articulation continue comprenant un engrenage hypocycloïdal reliant le premier flasque au deuxième flasque, ledit engrenage hypocycloïdal comprenant :
- une première couronne dentée, externe, centrée sur un premier axe et formée sur le premier flasque ;
- une deuxième couronne dentée, interne, centrée sur un deuxième axe, coaxial à la tige de commande, le deuxième axe parallèle au premier axe et décalé par rapport au premier axe par une came à excentrique, ladite deuxième couronne dentée étant formée sur le deuxième flasque et présentant un diamètre intérieur supérieur au diamètre extérieur de la première couronnée dentée,
- ladite came à excentrique montée rotative autour du deuxième axe coopérant avec l'organe d'entrée qui est monté tourillonnant autour du deuxième axe, l'organe d'entrée configuré pour entraîner la came à excentrique en rotation autour du deuxième axe, dans le premier sens ou dans le deuxième sens, en assurant ainsi le déplacement du deuxième flasque par rapport au premier flasque selon un mouvement hypocycloïdal imposé par l'engrenage.

La présente divulgation concerne encore un siège de véhicule automobile comprenant une assise et un dossier, ainsi qu'un équipement selon la présente divulgation, comprenant un ou plusieurs mécanismes d'articulation, le premier flasque solidaire de l'assise et le deuxième flasque solidaire du dossier selon la première possibilité, ou inversement le premier flasque solidaire du dossier, et le deuxième flasque solidaire de l'assise selon la seconde possibilité.

### Brève description des dessins

D'autres caractéristiques, détails et avantages apparaîtront à la lecture de la description détaillée ci-après, et à l'analyse des dessins annexés, sur lesquels :
**Fig. 1**

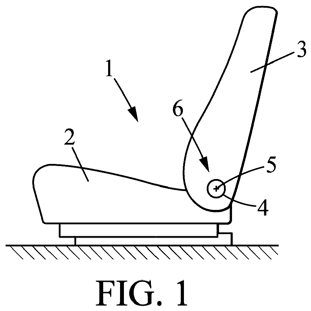

   [Fig. 1] est une vue schématique d'un siège de véhicule automobile comprenant un équipement selon la présente divulgation, dont le premier flasque et le deuxième flasque de deux mécanismes d'articulation sont assujettis respectivement à l'assise et au dossier du siège, des deux côtés du siège, commandé par une même tige de commande, pour assurer le réglage de l'inclinaison du dossier par rapport au siège, un dispositif de commande et de verrouillage permettant le réglage de l'inclinaison lorsque actionné manuellement par l'opérateur, ainsi que le blocage angulaire des mécanismes d'articulation par blocage de la tige de commande
**Fig. 2**

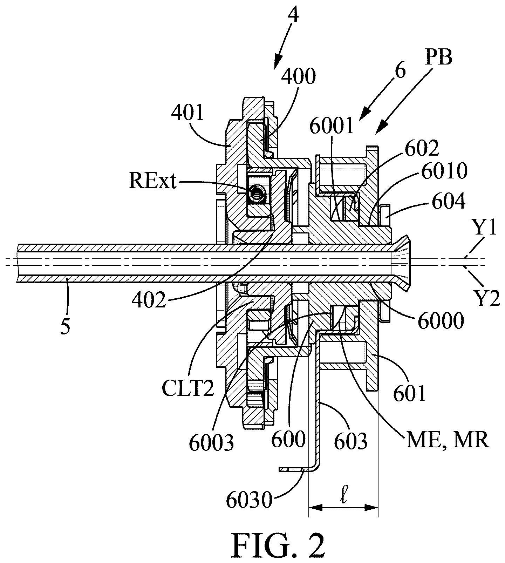

   [Fig. 2] est une vue de coupe, selon un plan passant par la tige de commande, d'un équipement selon la présente divulgation, comprenant, d'une part, à gauche, le mécanisme d'articulation avec le premier flasque et le deuxième flasque, ainsi que la came excentrique commandée par l'organe d'entrée solidaire en rotation de la tige de commande, et à droite, le dispositif de commande et de verrouillage comprenant le premier organe qui est solidaire en rotation de la tige de commande, et le deuxième organe mobile en rotation, selon une course limitée autour de l'axe de la tige de commande par rapport au premier organe, le dispositif de commande et de verrouillage comprenant un élément bloqueur, intercalé entre le premier organe et le deuxième organe, solidaire en rotation du premier organe mobile, déplaçable suivant une direction axiale, depuis une position de blocage pour laquelle ledit élément bloqueur vient se verrouiller sur un support fixe pour assurer le blocage de la tige de commande, et ainsi assurer l'irréversibilité du ou des mécanismes d'articulation, lorsque le deuxième organe, entraîneur est dans une position de repos intermédiaire par rapport au premier organe entre deux fins de course, et jusqu'à une position escamotée de l'élément bloqueur lorsque le deuxième organe entraîneur est dans une des deux positions de fin de course par rapport au premier organe, à savoir première fin de course selon le premier sens de rotation ou deuxième fin de cours selon le deuxième sens de rotation, libérant et entraînant la rotation de la tige de commande lorsque le deuxième organe est actionné manuellement..
**Fig. 3**

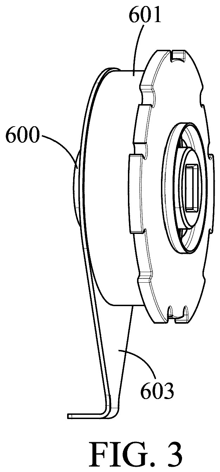

   [Fig. 3] est une vue de perspective du dispositif de commande et de verrouillage (le mécanisme d'articulation non illustré).
**Fig. 4**

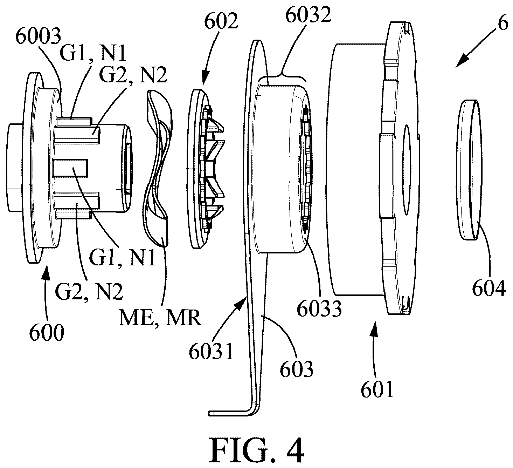

   [Fig. 4] est une vue éclatée de la figure 3, illustrant de gauche à droite, le premier organe, un ressort circulaire, ledit élément bloqueur, le support fixe, le deuxième organe et une bague de retenue
**Fig. 5**

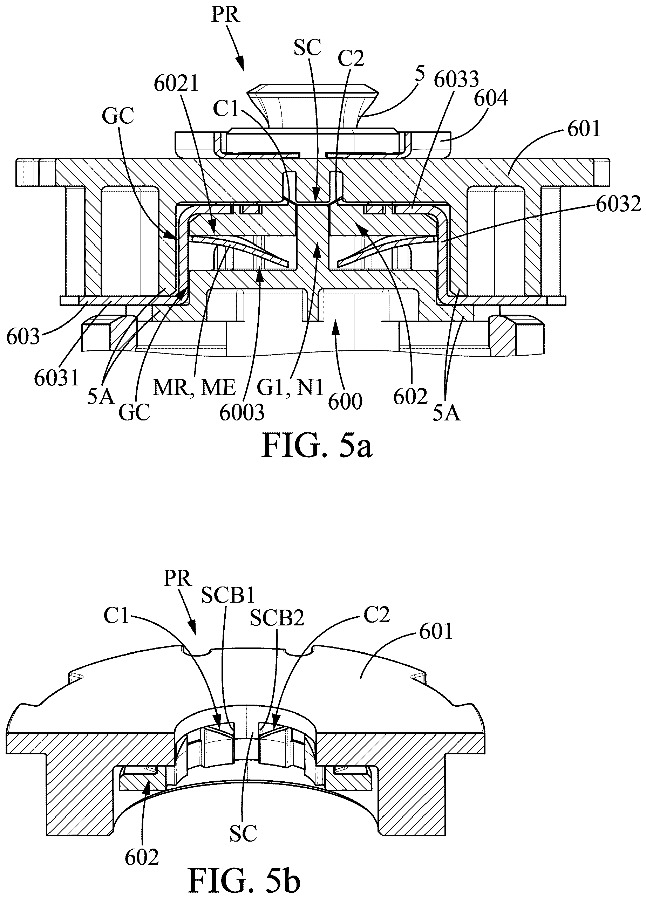

   [Fig. 5a] est une vue de coupe illustrant le deuxième organe dans ladite position de repos, intermédiaire, entre la première et la deuxième fin de course, illustrant plus particulière un suiveur de came, dans une position intermédiaire entre deux rampes convergentes, formant respectivement une première came et et une deuxième came, la première came configurée pour coopérer avec le suiveur de came pour déplacer ledit élément bloqueur dans la position escamoté lorsque la deuxième organe est dans la première fin de course, la deuxième la came configurée pour coopérer avec le suiveur de came pour déplacer ledit élément bloqueur dans la position escamoté lorsque la deuxième organe est dans la deuxième fin de course
**Fig.5b**
   [Fig. 5b] est une vue de détail partielle dudit élément bloqueur et du deuxième organe, illustrant plus particulièrement le suiveur de came et la première et deuxième came.
**Fig.6**

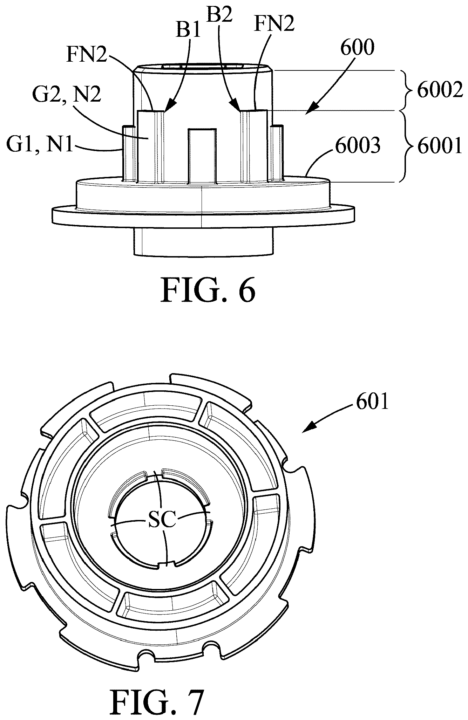

   [Fig. 6] est une vue de détail du première organe et ses différentes surfaces fonctionnelles, à savoir :
   - un épaulement formant une surface d'arrêt pour un ressort,
   - une première portée externe de guidage, comprenant sur sa périphérie des rainures de guidage, de deux longueurs, en alternance sur la périphérie de la portée de guidage, configuré pour assurer un guidage en translation dudit élément bloqueur,
   - une deuxième portée externe de guidage, cylindrique, configurée pour assurer le guidage en rotation dudit deuxième organe
**Fig. 7**
   [Fig. 7] est une vue de détail du deuxième organe
**Fig. 8**

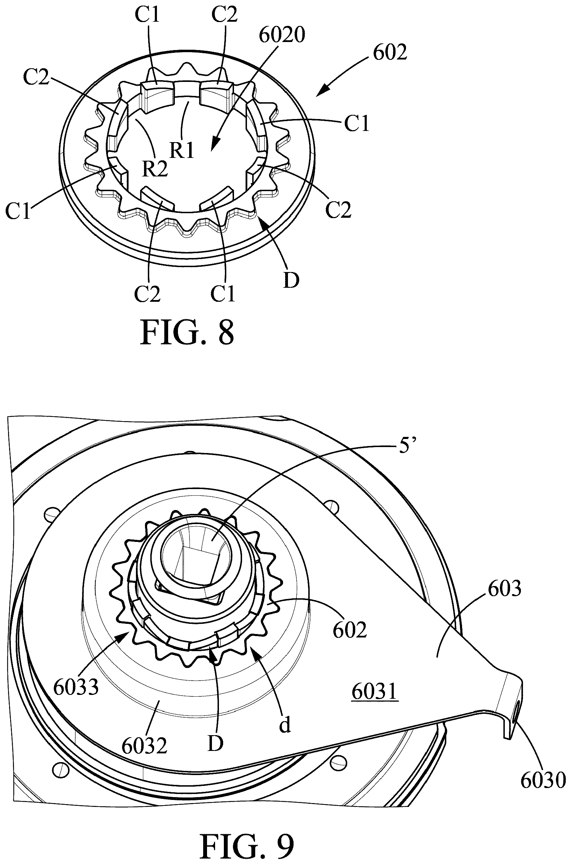

   [Fig. 8] est une vue détail dudit élément bloqueur.
**Fig. 9**
   [Fig. 9] est une vue du dispositif de commande et de verrouillage deuxième organe caché), illustrant plus particulièrement l'engagement des dentures interne et externe respectives dudit élément fixe et dudit élément bloqueur dans ladite position de blocage, assurant l'immobilisation en rotation dudit élément bloqueur par rapport au support fixe.
**Fig. 10**

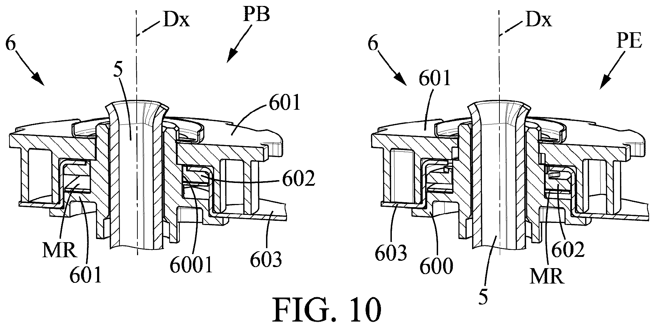

   [Fig. 10] est à gauche une vue de coupe du dispositif de commande et de verrouillage, dans la position de blocage dudit élément bloqueur, immobilisation la rotation de la tige de commande, et à droite, une vue de coupe du dispositif de commande et de verrouillage, dans la position escamotée dudit élément bloqueur, libérant la rotation de la tige de commande assurant la commande du ou des mécanismes d'articulation.
**Fig. 11**

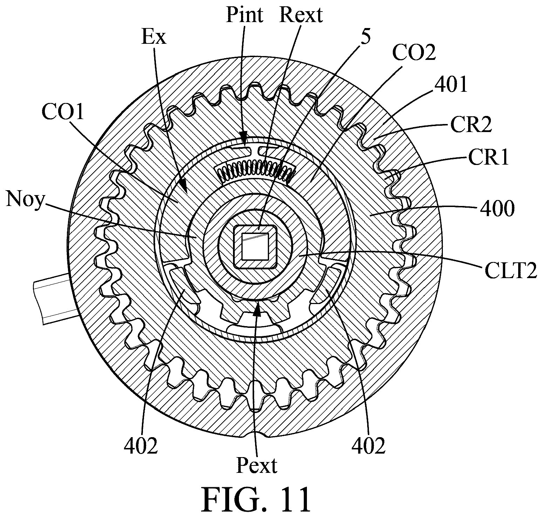

   [Fig. 11] est vue de coupe, selon un plan perpendiculaire à l'axe de la tige de commande, du mécanisme d'articulation continue, du type à engrenage à train hypocycloïdale.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aussi la présente divulgation est relative à un équipement configuré pour modifier l'inclinaison d'un dossier 3 par rapport à une assise 2 d'un siège 1, en particulier d'un véhicule automobile.

Un tel équipement comprend un ou plusieurs mécanisme d'articulation continue 4, le (ou chaque) mécanisme d'articulation 4 comprenant :
- un premier flasque 400 et un deuxième flasque 401 configurés pour être solidaires typiquement respectivement de l'assise 2 et du dossier 3 selon une première possibilité, ou inversement à savoir que le premier flasque est solidaire de l'assise et le second flasque solidaire du dossier selon une seconde possibilité;
- un organe d'entrée 402, monté rotatif, configuré pour être déplacé dans un premier sens de rotation, et dans un deuxième sens de rotation, et provoquer le déplacement du deuxième flasque 401 par rapport au premier flasque 400 en vue de changer l'inclinaison du dossier par rapport à l'assise, et dans lequel ledit organe d'entrée 402 du mécanisme d'articulation, ou lesdits organes d'entrée 402 des mécanismes d'articulation sont entraînés par une tige de commande 5, couplée en rotation avec ledit organe d'entrée, ou couplée simultanément avec les organes d'entrée 402, la tige de commande 5 monté pivotante autour d'un axe longitudinal de la tige.

Le mécanisme d'articulation 4 peut être un mécanisme d'articulation continue comprenant un engrenage typiquement hypocycloïdal reliant le premier flasque 400 au deuxième flasque 401, ledit engrenage hypocycloïdal comprenant :
- une première couronne dentée CR1, externe, centrée sur un premier axe Y1 et formée sur le premier flasque 400 ;
- une deuxième couronne dentée CR2, interne, centrée sur un deuxième axe Y2, coaxial à la tige de commande 5 , ladite deuxième couronne dentée CR2 étant formée sur le deuxième flasque 401 et présentant un diamètre intérieur supérieur au diamètre extérieur de la première couronnée dentée CR1 ; le deuxième axe Y2 est parallèle au premier axe et décalé par rapport au premier axe Y1 par une came à excentrique Ex
- ladite came à excentrique Ex montée rotative autour du deuxième axe Y2 coopérant avec l'organe d'entrée 402 monté tourillonnant autour du deuxième axe Y2 configuré pour entraîner la came à excentrique en rotation autour du deuxième axe Y2, dans le premier sens ou dans le deuxième sens, en assurant ainsi le déplacement du deuxième flasque 401 par rapport au premier flasque 400 selon un mouvement hypocycloïdal imposé par l'engrenage.

Ainsi la rotation de la came à excentrique permet de changer le point de contact entre la première couronne dentée CR1 et la deuxième couronne dentée CR2 en prise par leur denture et ainsi provoquer le déplacement du deuxième flasque 401 par rapport au premier flasque 400 selon la trajectoire imposée par l'engrenage hypocycloïdal.

En particulier, et selon un mode de réalisation :
- le premier flasque 401 peut comprendre un premier logement cylindrique centré sur le premier axe Y1
- le deuxième flasque 402 peut comprendre un deuxième logement, annulaire, centré sur le deuxième axe Y2, délimité d'une part, extérieurement, par la deuxième couronne dentée CR2, intérieure, et, d'autre part, intérieurement par un collet CLT2. Le deuxième logement reçoit la première couronne CR1 du premier flasque 400.

La came excentrique Ex comprend un diamètre externe, configuré pour glisser sur une paroi de glissement interne Pint du premier logement cylindrique du premier flasque, de préférence par l'intermédiaire d'une bague palier externe, encastrée voire soudée, et un diamètre interne configuré pour glisser sur une paroi de glissement externe Pext du collet CLT2, en particulier par l'intermédiaire d'un palier interne.

En particulier, ladite came à excentrique peut être à rattrapage de jeu et par exemple comprendre :
- un noyau Noy, comprenant une paroi interne cylindrique configurée pour pivoter sur la paroi de glissement externe du collet CL2, cylindrique, et une paroi externe
- deux éléments de glissement CO1, CO2, à fonction de coin, disposés entre, d'une part, la paroi de glissement interne du premier logement, et, d'autre part, le noyau, configurés pour glisser, intérieurement, sur la paroi externe du noyau Noy et extérieurement sur la paroi interne de glissement du premier logement,
- un ressort Rext disposé entre les deux éléments de glissement CO1, CO2 et sollicitant les éléments de glissement à l'écartement mutuel.

Un premier des éléments de glissement CO1, CO2 est configuré pour bloquer une rotation de la came excentrique par rapport au premier flasque 400, dans le premier sens de rotation, par effet de coin entre l'élément de glissement, d'une part, entre la paroi externe du noyau Noy et la paroi interne de glissement Pint du premier flasque 400.

Un deuxième des éléments de glissement CO1, CO2 est configuré pour bloquer une rotation de la came excentrique Ex par rapport au premier flasque 400, dans le deuxième sens de rotation, par effet de coin entre l'élément de glissement d'une part entre la paroi externe de glissement du noyau Noy et la paroi interne de glissement Pint du premier flasque.

L'organe d'entrée 402 est configuré pour venir en butée contre le premier élément glissant CO1, notamment en le rapprochant du deuxième élément glissant CO2, libérant la rotation et entraînant la rotation de la came excentrique Ex dans le premier sens de rotation, lorsque l'organe d'entrée est entraîné par la tige de commande 5, suivant le premier sens de rotation.

L'organe d'entrée 402 est configuré pour venir en butée contre le deuxième élément de glissement CO2 en le rapprochant du deuxième élément de glissement CO1, libérant la rotation et entraînant la rotation de la came excentrique Ex dans le deuxième sens de rotation, lorsque l'organe d'entrée est entraîné par la tige de commande 5 suivant le deuxième sens de rotation.

La fonction première de la came excentrique à rattrapage de jeu est de supprimer le jeu de la came excentrique, lorsque les deux éléments de glissement CO1, CO2 sont écartés par le ressort, et dans le but de supprimer les vibrations et bruit du mécanisme d'articulation, dans la position de repos du deuxième organe par rapport au premier organe du dispositif de commande. Lorsque les deux éléments de glissement à fonction de coin sont écartés par le ressort, cela a pour conséquence d'assurer un blocage de rotation de la came excentrique.

Un tel blocage n'est toutefois pas suffisant pour répondre en soi au problème identifié de changement non souhaité de l'inclinaison du dossier en particulier lorsque le dossier est fortement chargé, ou/ou lorsque le dossier présente une inclinaison importante avec l'assise, après des sollicitations répétées sur le dossier. Dans un tel cas, un glissement non souhaité peut être constaté entre la came excentrique et la paroi de glissement interne du premier flasque, même lorsque les éléments de glissement sont écartés et suppriment le jeu.

De manière générale l'organe d'entrée 402, typiquement sous forme d'un élément plastique, par exemple moulé, peut comprendre de manière générale, deux butées, configurées respectivement pour venir en contact, respectivement avec le premier élément glissant CO1 lorsque entraîné par la tige de commande 5 suivant le premier sens de rotation, et avec le deuxième élément glissant CO2 lorsque entraîné par la tige de commande suivant le deuxième sens de rotation, et comme visible à titre d'exemple à la figure 11.

De manière générale, l'organe d'entrée 402 peut prendre la forme d'un disque, centré sur le deuxième axe Y2 avec deux saillies, décalée angulairement l'une par rapport à l'autre autour du deuxième axe Y2, formant respectivement les deux butées, ainsi qu'un pot ce centrage, cylindrique monté tourillonnant à l'intérieur du collet CTL2 du deuxième flasque. Le plot de centrage comprend un évidemment tubulaire, de section non circulaire, telle que par exemple de carrée section, recevant la tige de commande 5. La section non circulaire de l'évidemment tubulaire est complémentaire à la section de la tige de commande 5, afin d'interdire une rotation relative entre l'organe d'entrée et la tige de commande 5, autour de l'axe de la tige de commande.

Le montage entre l'évidemment tubulaire de l'organe d'entrée 402 et la tige de commande peut être un montage en ajustement serré. L'organe d'entre 402 peut être typiquement un élément plastique moulé et la tige de commande 5, en métal de section typiquement carrée. Le montage serré peut être obtenu par la présence de nervures saillantes sur la surface interne, de l'évidemment tubulaire typiquement appelées « godron » servant à ajuster l'emboîtement. Ajuster l'emboitement permet de supprimer les vibrations à l'origine de bruit lorsque le système est soumis aux vibrations.

De manière notable, et selon la présente divulgation, ledit équipement comprend un dispositif de commande et de verrouillage 6, externe au(x) mécanisme d'articulation, configuré pour assurer la commande du ou des mécanismes d'articulation 4 lors d'un changement d'inclinaison du dossier par rapport au l'assise, ainsi que l'irréversibilité du mécanisme d'articulation, ou des mécanismes articulation par un blocage en rotation de la tige de commande 5 lorsque le dispositif de commande et de verrouillage est non actionné.

Lorsque l'équipement comprend plusieurs mécanismes d'articulation actionné par la tige de commande 5, le dispositif de commande et de verrouillage 6 permet avantageusement d'assurer l'irréversibilité de tous les mécanismes d'articulation 4 actionné par la tige de commande 5.

Le dispositif de commande et de verrouillage 6 comprend un premier organe 600, suiveur, solidaire en rotation de la tige de commande 5, et un deuxième organe 601, entraîneur, monté pivotant selon une course angulaire limitée par rapport au deuxième organe, autour de l'axe de la tige de commande 5.

Le deuxième organe 601 peut être un bouton rotatif ou poignée, manuellement opéré par un opérateur.

Le premier organe 600 et le deuxième organe 601, peuvent se présenter sous la forme de flasques, à savoir que le premier organe 600 peut être un troisième flasque, et le deuxième organe 601 peut être un quatrième flasque, sensiblement parallèle au troisième flasque. Ces troisième flasque et quatrième flasque s'étendent de manière parallèle au premier flasque 400 et au deuxième flasque 401 du ou des mécanismes d'articulation 4. Les plans des flasques (premier, deuxième, voire troisième et quatrième) sont sensiblement perpendiculaires à la tige de commande.

Le premier organe 600 peut comprendre une ouverture 6000 de section non circulaire complémentaire à la section de la tige de commande 5, configurée pour assurer un couplage en rotation du premier organe 600 avec la tige de commande 5.

Selon un mode de réalisation avantageux, le premier organe 600 est monté en ajustement serré sur la tige de commande 5. L'organe d'entre 402 peut être typiquement un élément plastique moulé et la tige de commande 5, en métal de section typiquement carrée. Le montage serré peut être obtenu par la présence de nervures saillantes sur la surface interne, de l'évidemment tubulaire typiquement appelées « godron » servant à ajuster l'emboîtement. Ajuster l'emboitement permet de supprimer les vibrations à l'origine de bruit lorsque le système est soumis aux vibrations.

Le guidage en rotation du deuxième organe 601 par rapport au premier organe 600, peut être obtenu par une portée externe de guidage 6002 (ci-après deuxième portée de guidage 6002), centrée sur le deuxième axe Y2, saillant du troisième flasque formé par le premier organe, autour duquel pivote le deuxième organe 600, par l'intermédiaire d'un évidement cylindrique comprenant une porte de guidage interne cylindrique.

Ledit premier organe 600 et le deuxième organe 601 comprennent :
- des premiers moyens de butée B1 configurés pour assurer l'entraînement en rotation du premier organe 600, suiveur en rotation autour de l'axe de la tige de command), par le deuxième organe 601, entraîneur, selon le premier sens de rotation, en une première fin de course de rotation du deuxième organe de commande 601 par rapport au premier organe 600,
- des deuxièmes moyens de butée B2 configurés pour assurer l'entraînement en rotation du premier organe 600, suiveur (en rotation autour de l'axe de la tige de commande), par le deuxième organe 601, entraîneur, selon le deuxième sens de rotation, en une deuxième fin de course du deuxième organe de commande par rapport au premier organe de commande.

Le dispositif de commande et de verrouillage 6 peut comprendre des moyens élastiques ME contraignant, en rotation autour de la tige de commande 5, le deuxième organe 601 par rapport au premier organe 600 dans une position de repos PR, intermédiaire entre la première fin de course et la deuxième fin de course.

De manière notable, un élément bloqueur 602 est solidaire en rotation du premier organe 600, autour de l'axe de la tige de commande, déplaçable par rapport au premier organe 600 selon une direction axiale Dx à l'axe de la tige de commande 5 suivant des moyens de guidage G1, G2 entre ledit élément bloqueur 602 et le premier organe 600.

Ledit élément bloqueur 602 est configuré pour venir se verrouiller sur un support fixe 603, fixe par rapport au premier flasque 400 selon la première possibilité, ou sur un support fixe 603, fixe par rapport au deuxième flasque 401 selon la seconde possibilité, dans une position de blocage PB de l'élément bloqueur 602, sous l'action d'une force de rappel de moyens ressorts MR afin d'assurer l'immobilisation en rotation de la tige de commande 5 dans la position de repos PR du deuxième organe 601 par rapport au premier organe 600. Une telle position de blocage PB est illustrée, à gauche, sur la vue de la figure 10.

Selon un mode de réalisation, le support fixe 603 comprend une ouverture Ov, centrée autour de l'axe longitudinale de la tige de commande 5, ladite ouverture OV pourvue sur un diamètre interne d'une pluralité de dents d contre lesquelles l'organe bloqueur 602 vient se verrouiller suivant différentes positions angulaires de verrouillage discontinues définies par les dents, autour de l'axe de la tige de commande 5 dans ladite position de blocage PB. Les dents peuvent présenter un profil triangulaire, rectangulaire (en créneaux), arrondi, ou autres.

La pluralité de dents d formées sur la diamètre interne de l'ouverture OV forment une couronne dentée interne, avec une denture orientée intérieurement vers l'axe de la tige de commande, ledit élément bloqueur 602 comprend une couronne dentée externe comprenant avec une denture D orientée extérieurement.

La hauteur de la denture du support fixe, suivant la direction axiale à la tige de commande est comprise entre 0,6 mm et 2 mm, et de sorte que la course axiale dudit élément bloqueur 602 entre la position de blocage PB et la position escamotée est de préférence inférieure à 3 mm, voire inférieure à 2mm.

Disposer d'une course axiale de l'élément bloqueur, faible, inférieure à 3mm, voire inférieur à 2mm, permet de limiter l'encombrent du dispositif de commande et de verrouillage 6 repéré I.

Si jamais, l'utilisateur procède à un changement d'inclinaison du dossier par rotation de la tige de commande 5, jusqu'à une position du mécanisme d'articulation pour laquelle ledit élément bloqueur se retrouve orienté entre deux positions angulaires de verrouillage discontinues, une réversibilité infime peut se produire, typiquement imperceptible pour l'utilisateur, selon une course angulaire inférieure à l'écart entre deux dents consécutives du support fixe 603, jusqu'à ce que les moyens ressorts MR contraignent de nouveau l'élément bloqueur 602 dans la position de blocage PB, dans une position angulaire de verrouillage discontinue.

Le support fixe 603 est fixe par rapport au premier flasque 400, selon la première possibilité, à savoir lorsque le premier flasque 400 est solidaire de l'assise, ledit deuxième flasque 401 est alors solidaire du dossier 3. Dans le cas de la seconde possibilité non illustré, à savoir le premier flasque est solidaire du dossier et le deuxième flasque solidaire de l'assise, le support fixe est solidaire du deuxième flasque.

La fixation du support fixe 603 est typiquement réalisée par une partie coudée, illustrée notamment à la figure 3, repérée 6030. Cette partie coudée peut être typiquement fixée à un gousset fixe de l'assise, ce gousset fixe étant fixé au premier flasque (typiquement par soudure) selon la première possibilité, ou encore au second flasque selon la seconde possibilité, et alors que le gousset mobile solidaire du dossier est fixé typiquement par soudure au second flasque selon la première possibilité, ou encore au premier flasque selon la seconde possibilité.

Le dispositif de commande et de verrouillage comprend encore des moyens de came C1, C2 entre le deuxième organe 601 et ledit élément bloqueur 602, configurés pour déplacer ledit élément bloqueur 602, axialement contre la force de rappel des moyens ressort MR, depuis la position de blocage PB jusqu'à au moins une position escamotée PE pour laquelle ledit élément bloqueur 602 est écarté du support fixe 603, au moins partiellement, libérant la rotation de la tige de commande 5 au moins dans le sens de rotation imposé par le deuxième organe 601, entraîneur, ledit élément bloqueur 602 étant escamoté axialement, lorsque le deuxième organe 601 et le premier organe 600 sont dans la première position de fin de course, lorsque entraînés selon le premier sens de rotation, et lorsque le deuxième organe 601 et le premier organe 600 sont dans la deuxième position de fin de course, lorsque entraînés, selon le deuxième sens de rotation. Une telle position escamotée PE est illustrée, à droite, sur la vue de la figure 10.

De manière générale, et telle qu'illustré les moyens de came C1, C2 peuvent comprendre au moins un couple de came comprenant une première came C1 et une deuxième came C2, d'une part, et un suiveur de came SC, d'autre part, portés par ledit élément bloqueur 602, et par le deuxième organe 601, ou inversement. Par exemple aux figures 5a et 5b, la première came C1 et la deuxième came C2 sont portées par ledit élément bloqueur 602, alors que le suiveur de came SC est porté par le deuxième organe 601. Selon un autre mode de réalisation (non illustré) les positions peuvent être inversées, à savoir que le suiveur de came SC peut être porté par ledit élément bloqueur, alors que la première came C1 et la deuxième came C2 sont portées par le deuxième organe 601.

Le suiveur de came SC et la première came C1 sont configurés pour engager mutuellement afin d'assurer le déplacement axial de l'élément bloqueur 602 dans la position escamotée PE en la première fin de course, et le suiveur de came SC et la deuxième came C2 sont configurés pour engager mutuellement afin d'assurer le déplacement axial de l'élément bloquer en la deuxième fin de course.

La première came C1 et le deuxième came C2, peuvent être constituées par des rampes, présentant des pentes opposées, réparties angulairement autour de l'axe de la tige de commande 5, et comme illustré à la figure 8 lorsque portées par ledit élément bloqueur 602.

De manière générale, et selon un mode de réalisation, les moyens de came peuvent comprendre plusieurs couples de came, et par exemple un nombre entier N de couple de came C1, C2 partis angulairement autour de l'axe de la tige de commande 5 tous les 360/N°, et par exemple quatre couples de came réparties tous les 90° comme illustré aux figures. Le nombre entier N peut par exemple être compris entre 3 et 5.

Selon un mode de réalisation, ledit élément bloqueur 602 est un corps, centré sur l'axe de la tige de commande 5, présentant une ouverture centrale 6020 traversée par une portée externe de guidage 6001 formée le premier organe 600 suiveur.

Ladite portée externe de guidage 6001 comprend, suivant l'axe de la tige de commande, lesdits moyens de guidage G1, G1 comprenant des premières parties réparties sur la périphérie de la portée externe de guidage 6001 orientées en longueur suivant la direction axiale, en relief sur la circonférence de la portée, et coopérant au guidage, avec des deuxièmes parties en relief complémentaire sur la périphérie intérieure dudit élément bloqueur 602. Les premières parties et les secondes parties engagent mutuellement de sorte à assurer un guidage en translation dudit élément bloqueur 602 par rapport audit premier organe 600 suivant la direction axiale, ainsi qu'un couplage en rotation dudit élément bloqueur 602 par rapport au premier organe 600 autour de l'axe de la tige de commande 5.

Par exemple les premières parties des moyens de guidage G1, G2 comprennent des nervures N1, N2 parallèles entre elles, réparties sur la circonférence de la portée externe de guidage 6001 et les deuxièmes parties mutuellement engageantes comprennent des rainures R1 R2 sur la périphérie intérieure de l'élément bloqueur 602.

Selon un mode de réalisation, les moyens ressort MR comprennent un organe ressort circulaire, traversé par ladite portée externe de guidage 6001 comprimé entre, d'une part, une face d'arrêt 6003 d'un épaulement s'étendant radialement au-delà d'un diamètre externe de la portée externe de guidage 6001 formée sur le premier organe 600, et d'autre part, une première paroi 6021 dudit élément bloqueur 602, tournée vers la face d'arrêt 6003. La face d'arrêt et la première paroi de l'élément bloqueur sont amenées à être déplacées l'une par rapport à l'autre suivant une translation uniquement (et donc sans rotation autour de la tige de commande). Un tel organe ressort travaille en compression.

Selon un mode de réalisation, l'épaulement formant la face d'arrêt 6003, d'une part, et la portée externe de guidage 6001 dudit premier organe 600, dit première portée externe de guidage 6001, d'autre part, sont suivis d'une seconde portée externe de guidage 6002 dudit premier organe 600. La seconde portée externe de guidage 6002 est cylindrique, et prolonge la première portée externe de guidage 6001. Ladite seconde portée externe de guidage 6002 est configurée pour coopérer avec une portée de guidage 6010, interne, formée sur une ouverture centrale dudit deuxième organe 601, pour assurer le guidage en rotation dudit deuxième organe 601 par rapport au première organe 600 selon la course angulaire limitée, autour de l'axe de la tige de commande 5.

Selon un mode de réalisation, au moins en partie des nervures N2 s'étendent, suivant la direction axiale de la tige de commande 5, jusqu'à leur extrémité distale jusqu'à la zone de jonction entre, d'une part, la première portée externe de guidage 6001 et la seconde portée externe de guidage 6002.

Les nervures N2 sont terminées à leur extrémité distales par des faces d'arrêt FN2 coopérant en butée avec une paroi interne du deuxième organe 601 en maintenant un écartement défini, entre la face d'arrêt 6003 dudit épaulement du premier organe 600, d'une part, et ladite paroi interne dudit deuxième organe 601 tournée vers la face d'arrêt 6003, d'autre part.

Selon un mode de réalisation, une bague de retenue 604 peut être fixée sur la seconde portée externe de guidage 6002, configuré pour coopérer en butée avec une face externe du deuxième organe 601.

Selon un mode de réalisation, les moyens de came C1, C2 comprennent au moins un couple de cames portées par ledit élément bloqueur 602 et un suiveur de came SC porté par ledit deuxième organe 601, ou inversement.

Le ou chaque couple de came comprend une première came C1 formant une rampe configurée pour coopérer avec ledit suiveur de came SC en assurant le déplacement dudit élément bloqueur 602 de la position de blocage PB jusqu'à la position escamotée PE dans la première fin de course entre le deuxième organe 601 et ledit première organe 600, et une deuxième came C2 formant une rampe configurée pour coopérer avec ledit suiveur de came SC en assurant le déplacement dudit élément bloqueur 602 de la position de blocage PB jusqu'à la position escamotée dans la deuxième fin de course entre le deuxième organe 601 et ledit première organe 600.

Selon un mode de réalisation, le suiveur de came SC notamment porté par le deuxième organe 601 se trouve dans une position intermédiaire dans la première came C1 et la deuxième came C2 dans la position de repos PR du deuxième organe 601 par rapport au premier organe 600, et comme illustré à la figure 5a.

L'organe ressort circulaire forme non seulement, lesdits moyens ressort MR contraignant le déplacement dudit élément bloqueur 602 de la position escamotée PE jusqu'à la position de blocage PB mais également les moyens élastique ME, en contraignant le déplacement du deuxième organe 601 par rapport au première organe 600, depuis la première fin de course jusqu'à la position de repos PR par le travail du suiveur de came SC avec la première came C1 et en contraignant le déplacement du deuxième organe 601 par rapport au première organe 600, depuis la deuxième fin de course jusqu'à la position de repos par le travail du suiveur de came SC avec la deuxième came C2.

Selon un mode de réalisation :
- les premiers moyens de butée B1 limitant le déplacement du deuxième organe 601 par rapport au premier organe 600 dans le premier sens de rotation peuvent comprendre une première surface d'arrêt SCB1 du suiveur de came SC, configurée pour venir en buté contre une des nervures N2 à une extrémité distale de la rampe formant la première came C1
- les seconds moyens de butée B2 limitant le déplacement du deuxième organe 601 par rapport au premier organe 600 dans le deuxième sens de rotation comprend un deuxième surface d'arrêt SCB2 du suiveur de came SC, configurée pour venir en buté contre une des nervures N2 à une extrémité distale de la rampe formant la deuxième came C2.

De manière générale, et telle que notamment illustré à la figure 6, les moyens de guidage peuvent comprendre, en alternance, sur la périphérie de la première portée externe de guidage 6001, des nervures N1 de petite longueur, et des nervures N2, de plus grande longueur, comparativement aux nervures N1. Les nervures N2 s'étendent à leur extrémité distale jusqu'à la zone de jonction entre la première portée externe de guidage 6001 (i.e guidage en coulissement dudit élément bloqueur 602) et la deuxième portée de guidage 6002 (i.e guidage en rotation dudit deuxième organe 601), et alors que les nervures N1 de plus petite longueur s'arrête, suivant la direction axiale avant cette zone, en laissant un dégagement délimité angulairement entre deux nervures N2 de grande longueur, et délimité axialement, sur la portion de longueur non couverte par les petites nervures.

Le suiveur de came SC solidaire du deuxième organe 601 peut être une saillie, qui s'étend, du deuxième organe 601, dans ce dégagement.

De manière générale, et comme illustrée, la première came C1, s'insère, dans une rainure formée entre la nervure N1 et la nervure N2 (à gauche de la nervure N1), alors que la deuxième came C2 s'insère dans une rainure formée entre ladite nervure N1 et la nervure N2 (à droite).

Lorsque le deuxième organe 601 est dans la position de repos, intermédiaire, et telle qu'illustré à la figure 5a, on remarque que le suiveur de came SC est suivant la direction axiale, dans une position en prolongement d'une nervure N1 de petite longueur, le suiveur de came SC alors disposé, angulairement autour de l'axe de la tige de commande, entre, d'une part, la rampe formant la première came C1, elle-même disposée d'un côté (par exemple gauche) entre ladite nervure N1 de petite longueur et la nervure N2, gauche, et d'autre part, la rampe formant la formant première came C2, elle-même disposée, de l'autre côté (par exemple droite) entre ladite nervure N1 de petite longueur et la nervure N2 droite.

Lorsque l'utilisateur actionne en rotation ledit deuxième organe 601, entraîneur, dans le premier sens de rotation, le deuxième organe 601 pivote par rapport au premier organe 600, le suiveur de came SC venant engager alors avec la première came C1, en déplaçant ledit élément bloqueur 602 de la position de blocage PB jusqu'à la position escamotée PE libérant la rotation de la tige de commande, ledit suiveur de came SC venant en butée en la première fin course avec une face latérale (droite) de la nervure N2 de grande longueur (gauche).

La poursuite de la rotation du deuxième organe 601 en cette première fin de course permet d'entraîner la tige de commande 5 dans le premier sens et ainsi d'entraîner le ou les organes d'entrée 402 couplé(s) en rotation à la tige de commande dans ce premier sens pour permettre le changement d'inclinaison du dossier par rapport à l'assise du siège.

Au contraire, et lorsque l'utilisateur actionne en rotation ledit deuxième organe 601, entraîneur, dans le deuxième sens de rotation, le deuxième organe 601 pivote par rapport au premier organe, le suiveur de came SC venant engager alors avec la deuxième came C2, en déplaçant ledit élément bloqueur 602 de la position de blocage PB jusqu'à la position escamotée PE libérant la rotation de la tige de commande, ledit suiveur de came SC venant en butée en la deuxième fin course avec une face latérale (gauche) de la nervure N2 de grande longueur (droite).

La poursuite de la rotation du deuxième organe en cette deuxième fin de course permet d'entrainer la tige de commande 5 dans le deuxième sens et ainsi d'entraîner le ou les organes d'entrée 402 couplé(s) en rotation à la tige de commande dans ce deuxième sens pour permettre le changement d'inclinaison du dossier par rapport à l'assise du siège.

Selon un mode de réalisation, le première organe 600 et le deuxième organe 601, peuvent former un boîter logeant ledit organe bloqueur 602 et lesdits moyens ressort MR. Le support fixe 603 est un élément mince, intercalé entre le premier élément et le deuxième élément.

De préférence, le dispositif de commande et de verrouillage 6 comprend :
- des moyens de centrage dudit support fixe 603, par rapport à l'axe de la tige de commande, comprenant des surfaces de guidage cylindriques GC, entre ledit support fixe 603, d'une part, et ledit premier organe 600 et/ ou ledit deuxième organe 601, d'autre part,
- des moyens d'immobilisation dudit support fixe 603, par rapport à l'ensemble premier organe 600 et deuxième organe 601, ledit support fixe 603, intercalé entre le premier organe 600 et le deuxième organe 601 maintenu par des surfaces d'arrêt SA opposées appartenant respectivement au deuxième et premier organe 601, 600 afin d'assurer l'arrêt du support fixe 603 par rapport audit ensemble suivant la direction axiale de la tige de commande 5.

De manière générale, le premier organe 600 et le deuxième organe peuvent 601 être en plastique, fabriqué notamment par moulage typiquement par injection. L'élément bloqueur 602 peut encore être un élément moulé, en plastique ou encore en Zamak.

Le support fixe, mince, peut être obtenu des opérations de découpe d'une feuille métallique. La feuille métallique peut être d'épaisseur compris entre 0,6mm à 2mm.

La découpe de la feuille métallique permet d'obtenir la portion du support fixe 603 portant l'ouverture Ov, y compris les éventuelles dents d contre lesquelles l'élément bloqueur vient se verrouiller. Une extrémité de fixation 6030 du support fixe, est pliée par exemple à 90°, voire moins tel que 30° ou 15° par rapport au plan du support fixe portant l'ouverture Ov. Cette extrémité de fixation assure la solidarisation du support typiquement en pénétrant dans une découpe d'un gousset ou flasque de l'assise.

On remarque que le support fixe 603 mince peut comprendre :
- une première portion plane 6031, mince, maintenu par les surfaces d'arrêt SA, antagonistes appartenant au premier organe 600 et au deuxième organe 601, les surfaces d'arrêt SA étant configurées pour assurer l'arrêt axial du support fixe 603 suivant l'axe de la tige de commande 5, cette première portion 6031 se prolongeant en dehors du boitier, voire se terminant par ladite extrémité de fixation 6030
- une portion cylindrique 6032, mince, prolongeant intérieurement la première portion 6031 liée à la première portion 6031 par l'une des bases du cylindre formée par la portion cylindrique 6032, ladite portion cylindrique 6032 étant centrée sur l'axe de la tige de commande 5, la portion de cylindrique formant des surfaces de guidage GC, coopérant avec une ou des surfaces de guidage cylindrique complémentaire appartenant au premier organe 600 et/ou deuxième organe afin d'assurer le centrage du support fixe 603 par rapport à l'axe de la tige de commande 5,
- une deuxième portion plane 6033 prolongeant l'autre base de la portion cylindrique 6032, la deuxième portion plane 6033, s'étendant parallèlement à la première portion plane, la deuxième portion plane présentant ladite ouverture Ov, centrée sur l'axe de la tige de commande, portant les dents d.

On remarque que l'élément bloqueur 602 est configuré pour coulisser le long des moyens de guidage G1, G2, dans un volume intérieur de la portion cylindrique 6032 laissé libre pour le déplacement de l'élément bloqueur 602 de la position de blocage PB telle qu'illustrée à gauche à la figure 10, jusqu'à la position escamotée PE.

Le montage du dispositif de commande et de verrouillage 6 est aisé, et comme compréhensible de la vue de la figure 4, en ce que les différents composants (de gauche à droite à la figure 4) à savoir le ressort circulaire, l'élément bloqueur 602 , le support fixe 603, le deuxième organe 601 peuvent être empilés et assemblés successivement sur la première portée externe 6001 et la deuxième portée externe 6002 du premier organe 602, en appui sur la face d'arrêt 6003, puis la bague de retenue 604 est fixée sur la deuxième portée externe 6002 afin d'assurer le maintien de l'assemblage.

### Liste des signes de référence

- 1 : Siège,
- 2 : Assise,
- 3. Dossier,
- 4. Mécanisme d'articulation continue,
- 400, 401. Premier flasque et deuxième flasque,
- CR1, CR2. Première et deuxième couronne dentée,
- CLT2. Collet (deuxième flasque 401),
- Pint. Paroi interne de glissement (du premier flasque coopérant avec un diamètre externe de la came excentrique)
- Pext. Paroi externe de glissement
- 402. Organe d'entrée,
- Ex. Came excentrique
- Noy. Noyau,
- CO1, CO2 premier et deuxième éléments de glissement à effet de coin,
- RExt. Ressort,
- Y1, Y2. Premier axe et deuxième axe (premier et deuxième flasque)
- 5. Tige de commande,
- 6. Dispositif de commande et de verrouillage, (externe au(x) mécanisme d'articulation),
- 600, 601. Premier organe et deuxième organe (respectivement suiveur et entraîneur,
- 6000. Ouverture de section non circulaire, notamment de section carrée (du premier organe) recevant la tige de commande de section complémentaire),
- 6001 Première portée externe de guidage (pour le guidage en translation dudit élément bloqueur),
- 6002. Deuxième portée externe de guidage (pour le guidage en rotation du deuxième organe par rapport au premier organe)
- 6003 Face d'arrêt (en appui contre les moyens ressorts),
- 6010. Portée de guidage interne (deuxième organe),
- 602. Elément bloqueur,
- 6020. Ouverture centrale (traversée par la portée externe de guidage)
- 6021 première paroi (en appui contre les moyens ressorts)
- 603. Support fixe,
- 6030. Extrémité de fixation (partie coudée)
- 6031. Première portion plane,
- 6032. Portion cylindrique,
- 6033. Deuxième portion plane (portant l'ouverture Ov)
- 604. Baque de retenue,
- B1, B2. Premiers et deuxièmes moyens de butée (entre le premier organe suiveur et le deuxième organe, entraineur),
- ME. Moyens élastiques (contraignant le deuxième organe par rapport au premier organe en une position intermédiaire entre un première fin de course et une deuxième fin de course,
- MR. Moyens ressort (contraignant ledit élément bloqueur depuis la position escamotée libérant la rotation de la tige de commande jusqu'à position de blocage inhibant la rotation de la tige de commande),
- C1, C2. Première et deuxième cames (contraignant ledit élément bloqueur depuis la position de blocage jusqu'à la position escamoté respectivement dans la première fin de course et la deuxième fin de course entre le deuxième et le première organe),
- SC. Suiveurs de cames (en coopération avec les première et deuxième cames)
- Ov . Ouverture,
- d dents, (denture du support fixe)
- D dents (denture bloqueur),
- Dx. Direction axiale,
- G1, G2. Moyens de guidage,
- N1, N2. Nervures,
- R1, R2. Rainures,
- GC. Surfaces de guidage cylindriques, (centrage du support fixe)
- SA. Surface d'arrêt (pour l'arrêt axial du support fixe).

## Revendications

1. Equipement de réglage de l'inclinaison d'un dossier (3) par rapport à une assise (2) d'un siège (1) comprenant un ou plusieurs mécanisme d'articulation continue (4), ledit ou chaque mécanisme d'articulation (4) comprenant :
- un premier flasque (400) et un deuxième flasque (401) configurés pour être solidaires respectivement de l'assise (2) et du dossier (3) et selon une première possibilité, ou inversement solidaires respectivement du dossier (3) et de l'assise (2) selon une seconde possibilité;
- un organe d'entrée (402), monté rotatif, configuré pour être déplacé dans un premier sens de rotation, et dans un deuxième sens de rotation, et provoquer le déplacement du deuxième flasque (401) par rapport au premier flasque (400) , et dans lequel ledit organe d'entrée (402) du mécanisme d'articulation, ou lesdits organes d'entrée (402) des mécanismes d'articulation sont entraînés par une tige de commande (5), couplée en rotation avec l'organe d'entrée du mécanisme d'articulation, ou lesdits organes d'entrée (402) des mécanismes d'articulation, la tige de commande (5) montée pivotante autour d'un axe longitudinal de la tige,
et dans lequel ledit équipement comprend un dispositif de commande et de verrouillage (6), externe au(x) mécanisme(s) d'articulation (4), configuré pour assurer la commande du ou des mécanismes d'articulation (4) lors du changement d'inclinaison du dossier par rapport à l'assise, et l'irréversibilité du ou des mécanismes articulation par blocage en rotation de la tige de commande (5) lorsque le dispositif (6) de commande et de verrouillage est non actionné, le dispositif de commande et de verrouillage comprenant :
- un premier organe (600), suiveur, solidaire en rotation de la tige de commande (5), et un deuxième organe (601), entraîneur, monté pivotant selon une course angulaire limitée par rapport au premier organe autour de la tige de commande (5), et dans lequel ledit premier organe (600) et le deuxième organe (601) comprennent des premiers moyens de butée (B1) configurés pour assurer l'entraînement en rotation du premier organe (600), suiveur, par le deuxième organe (601), entraîneur, selon le premier sens de rotation, en une première fin de course de rotation du deuxième organe de commande (601) par rapport au premier organe (600), et des deuxièmes moyens de butée (B2) configurés pour assurer l'entraînement en rotation du premier organe, suiveur, par le deuxième organe, entraîneur, selon le deuxième sens de rotation, en une deuxième fin de course du deuxième organe de commande par rapport au premier organe de commande,
- des moyens élastiques (ME) contraignant le deuxième organe (601) en rotation par rapport au premier organe (600) dans une position de repos (PR), intermédiaire entre la première fin de course et la deuxième fin de course,
- un élément bloqueur (602) solidaire en rotation du premier organe (600), autour de l'axe de la tige de commande, déplaçable par rapport au premier organe (600) selon une direction axiale (Dx) à l'axe de la tige de commande (5) suivant des moyens de guidage (G1, G2) entre ledit élément bloqueur (602) et le premier organe (600), ledit élément bloqueur (602) étant configuré pour venir se verrouiller sur un support fixe (603), fixe par rapport au premier flasque (400) selon la première possibilité, ou sur un support fixe (603), fixe par rapport au deuxième flasque (401) selon la seconde possibilité, dans une position de blocage de l'élément bloqueur (602), sous l'action d'une force de rappel de moyens ressorts (MR) afin d'assurer l'immobilisation en rotation de la tige de commande (5) dans la position de repos (PR) du deuxième organe (601) par rapport au premier organe (600),
- des moyens de came (C1, C2) entre le deuxième organe (601) et ledit élément bloqueur, configurés pour déplacer ledit élément bloqueur (602), axialement contre la force de rappel des moyens ressort (MR), depuis la position de blocage (PB) jusqu'à au moins une position escamotée (PE) pour laquelle ledit élément bloqueur (602 ) est écarté du support fixe (603), au moins partiellement, libérant la rotation de la tige de commande (5) au moins dans le sens de rotation imposé par le deuxième organe (601), entraîneur, ledit élément bloqueur (602) étant escamoté axialement, lorsque le deuxième organe (601) et le premier organe (600) sont dans la première position de fin de course, lorsque entraînés selon le premier sens de rotation, et lorsque le deuxième organe (601) et le premier organe (600) sont dans la deuxième position de fin de course, lorsque entraînés, selon le deuxième sens de rotation.

2. Equipement selon la revendication 1 dans lequel le support fixe (603) comprend une ouverture (Ov), centrée autour de l'axe longitudinale de la tige de commande (5), ladite ouverture (OV) pourvue sur un diamètre interne d'une pluralité de dents (d) contre lesquelles l'organe bloqueur (602) vient se verrouiller suivant différentes positions angulaires de verrouillage discontinues définies par les dents, autour de l'axe de la tige de commande (5), dans ladite position de blocage (PB).

3. Equipement selon la revendication 2, dans lequel la pluralité de dents (d) formées sur la diamètre interne de l'ouverture (OV) forment une couronne dentée interne, avec une denture orientée intérieurement vers l'axe de la tige de commande, ledit élément bloqueur (602) comprend une couronne dentée externe comprenant avec une denture (D) orientée extérieurement.

4. Equipement selon la revendication 2 ou 3, dans lequel la hauteur de la denture, suivant la direction axiale à la tige de commande est comprise entre 1 mm et 2 mm, et de sorte que la course axiale dudit élément bloqueur (602) entre la position de blocage (PB) et la position escamotée est inférieure à 3 mm, voire inférieure à 2mm.

5. Equipement selon l'une des revendications 1 à 4, dans lequel le premier organe (600) comprend une ouverture (6000) de section non circulaire complémentaire à la section de la tige de commande (5), configurée pour assurer un couplage en rotation du premier organe (600) avec la tige de commande (5) et dans lequel le premier organe (600) est monté en ajustement serré sur la tige de commande (5).

6. Equipement selon l'une des revendications 1 à 5, dans lequel ledit élément bloqueur (602) est un corps, centré sur l'axe de la tige de commande (5), présentant une ouverture centrale (6020) traversée par une portée externe de guidage (6001) formée le premier organe (600) suiveur, ladite portée externe de guidage (6001) comprenant, suivant l'axe de la tige de commande, lesdits moyens de guidage (G1, G2) comprenant des premières parties réparties sur la périphérie de la portée externe de guidage (6001), orientées en longueur suivant la direction axiale, en relief sur la circonférence de la portée, et coopérant au guidage, avec des deuxièmes parties en relief complémentaire sur la périphérie intérieure dudit élément bloqueur (602), de sorte à assurer un guidage en translation dudit élément bloqueur (602) par rapport audit premier organe (600) suivant la direction axiale, ainsi qu'un couplage en rotation dudit élément bloqueur (602) par rapport au premier organe (600) autour de l'axe de la tige de commande (5).

7. Equipement selon la revendication 6, dans lequel les premières parties des moyens de guidage (G1, G2) comprenant des nervures (N1, N2) parallèles entre elles, réparties sur la circonférence de la portée externe de guidage (6001) et les deuxièmes parties mutuellement engageantes comprennent des rainures (R1 R2) sur la périphérie intérieure de l'élément bloqueur (602).

8. Equipement selon la revendication 6 ou 7, dans lequel les moyens ressort (MR) comprennent un organe ressort circulaire, traversé par ladite portée externe de guidage (6001) comprimé entre, d'une part, une face d'arrêt (6003) d'un épaulement s'étendant radialement au-delà d'un diamètre externe de la portée externe de guidage (6001) formée sur le premier organe (600), et d'autre part, une première paroi (6021) dudit élément bloqueur (602), tournée vers la face d'arrêt (6003).

9. Equipement selon la revendication 8, dans lequel l'épaulement formant la face d'arrêt (6003), d'une part, et la portée externe de guidage (6001) dudit premier organe (600) dit première portée externe de guidage (6001), d'autre part, sont suivis d'une seconde portée externe de guidage (6002) dudit premier organe (600), cylindrique, en prolongement de la première portée externe de guidage (6001), ladite seconde portée externe de guidage (6002) étant configurée pour coopérer avec une portée de guidage (6010), interne formée sur une ouverture centrale dudit deuxième organe (601), pour assurer le guidage en rotation dudit deuxième organe (601) par rapport au première organe (600) selon la course angulaire limitée, autour de l'axe de la tige de commande (5).

10. Equipement selon les revendications 7 et 9, dans lequel au moins en partie des nervures (N2) s'étendent, suivant la direction axiale de la tige de commande (5), jusqu'à leur extrémité distale jusqu'à la zone de jonction entre, d'une part, la première portée externe de guidage (6001) et la seconde portée externe de guidage (6002), lesdites nervures (N2) terminées à leur extrémité distales par des faces d'arrêt (FN2) coopérant en butée avec une paroi interne du deuxième organe (601) en maintenant un écartement défini, entre la face d'arrêt (6003) dudit épaulement du premier organe (600), d'une part, et ladite paroi interne dudit deuxième organe (601) tournée vers la face d'arrêt (6003).

11. Equipement selon la revendication 9 ou 10, dans lequel une bague de retenue (604) est fixée sur la seconde portée externe de guidage (6002), configuré pour coopérer en butée avec une face externe du deuxième organe (601).

12. Equipement selon l'une des revendications 1 à 11, dans lequel les moyens de came (C1, C2) comprennent au moins un couple de cames portées par ledit élément bloqueur (602) et un suiveur de came (SC) porté par ledit deuxième organe (601), ou inversement, le ou chaque couple de came comprenant une première came (C1) formant une rampe configurée pour coopérer avec ledit suiveur de came (SC) en assurant le déplacement dudit élément bloqueur (602) de la position de blocage (PB) jusqu'à la position escamotée (PE) dans la première fin de course entre le deuxième organe et ledit première organe, et une deuxième came (C2) formant une rampe configurée pour coopérer avec ledit suiveur de came (SC) en assurant le déplacement dudit élément bloqueur (602) de la position de blocage (PB) jusqu'à la position escamotée dans la deuxième fin de course entre le deuxième organe et ledit première organe.

13. Equipement selon les revendications 8 et 12, dans lequel ledit suiveur de came (SC) se trouve dans une position intermédiaire entre la première came (C1) et la deuxième came (C2) dans la position de repos (PR) du deuxième organe (601) par rapport au premier organe (600), l'organe ressort circulaire formant non seulement, lesdits moyens ressort (MR) contraignant le déplacement dudit élément bloqueur (602) de la position escamotée (PE) jusqu'à la position de blocage (PB) mais également les moyens élastique (ME), contraignant le déplacement du deuxième organe par rapport au première organe, depuis la première fin de course jusqu'à la position de repos par le travail du suiveur de came avec la première came et en contraignant le déplacement du deuxième organe par rapport au première organe, depuis la deuxième fin de course jusqu'à la position de repos par le travail du suiveur de came avec la deuxième came.

14. Equipement selon la revendication 7 ou 10 en combinaison avec la revendication 13, dans lequel le suiveur de came est porté par le deuxième organe (601), et ledit au moins un couple de came (C1, C2) par ledit élément bloqueur (602) et dans lequel les premiers moyens de butée (B1) limitant le déplacement du deuxième organe (601) par rapport au premier organe (600) dans le premier sens de rotation comprennent une première d'une face d'arrêt (SCB1) du suiveur de came (SC), configurée pour venir en buté contre une des nervures (N2) à une extrémité distale de la rampe formant la première came (C1) et dans lequel les seconds moyens de butée (B2) limitant le déplacement du deuxième organe (601) par rapport au premier organe (600) dans le deuxième sens de rotation comprennent un deuxième surface d'arrêt (SCB2) du suiveur de came (SC), configurée pour venir en buté contre une des nervures (N2) à une extrémité distale de la rampe formant la deuxième came (C2).

15. Equipement selon l'une des revendications 1 à 14 , dans le première organe (600) et le deuxième organe (601), formant un boîter logeant ledit élément bloqueur (602) et lesdits moyens ressort (MR) et dans lequel support fixe (603) est un élément mince, intercalé entre le premier élément et le deuxième élément , et dans lequel le dispositif de commande et de verrouillage (6) comprend :
- des moyens de centrage dudit support fixe (603), par rapport à l'axe de la tige de commande, comprenant des surfaces de guidage cylindriques (GC), entre ledit support fixe (603), d'une part, et ledit premier organe (600) et/ ou ledit deuxième organe (601), d'autre part,
- des moyens d'immobilisation dudit support fixe (603), par rapport à l'ensemble premier organe (600) et deuxième organe (601) ledit support fixe (603), intercalé entre le premier organe (600) et le deuxième organe (601) maintenu en des surfaces d'arrêt (SA) opposées appartenant respectivement au deuxième et premier organe (601, 600) afin d'assurer l'arrêt du support fixe (603) par rapport audit ensemble suivant la direction axiale de la tige de commande (5)..

16. Equipement selon l'une des revendications 1 à 15, dans lequel le mécanisme d'articulation (4) est un mécanisme d'articulation continue comprenant un engrenage hypocycloïdal reliant le premier flasque (400) au deuxième flasque (401), ledit engrenage hypocycloïdal comprenant :
- une première couronne dentée (CR1), externe, centrée sur un premier axe (Y1) et formée sur le premier flasque (400) ;
- une deuxième couronne dentée (CR2), interne, centrée sur un deuxième axe (Y2), coaxial à la tige de commande (5), le deuxième axe (Y2) parallèle au premier axe et décalé par rapport au premier axe (Y1) par une came à excentrique (Ex), ladite deuxième couronne dentée (CR2)) étant formée sur le deuxième flasque (401) et présentant un diamètre intérieur supérieur au diamètre extérieur de la première couronnée dentée (CR1),
- ladite came à excentrique (Ex) montée rotative autour du deuxième axe (Y2) coopérant avec l'organe d'entrée (402) qui est monté tourillonnant autour du deuxième axe (Y2), l'organe d'entrée configuré pour entraîner la came à excentrique en rotation autour du deuxième axe (Y2), dans le premier sens ou dans le deuxième sens, en assurant ainsi le déplacement du deuxième flasque (401) par rapport au premier flasque (400) selon un mouvement hypocycloïdal imposé par l'engrenage.

17. Siège de véhicule automobile comprenant une assise et un dossier, ainsi qu'un équipement selon l'une des revendications 1 à 16 comprenant un ou plusieurs mécanismes d'articulation, le premier flasque (400) solidaire de l'assise (2) et le deuxième flasque solidaire du dossier (3) selon la première possibilité, ou inversement le premier flasque (400) solidaire du dossier, et le deuxième flasque (401) solidaire de l'assise selon la seconde possibilité.

## Patentansprüche

1. Vorrichtung zum Einstellen der Neigung einer Rückenlehne (3) gegenüber einer Sitzfläche (2) eines Sitzes (1), umfassend einen oder mehrere stufenlose Gelenkmechanismen (4), wobei der oder jeder Gelenkmechanismus (4) Folgendes umfasst:
- einen ersten Flansch (400) und einen zweiten Flansch (401), die dazu konfiguriert sind, entsprechend einer ersten Möglichkeit jeweils an der Sitzfläche (2) und der Rückenlehne (3) befestigt zu sein oder umgekehrt entsprechend einer zweiten Möglichkeit an der Rückenlehne (3) und der Sitzfläche (2) befestigt zu sein;
- ein Eingangselement (402), das drehbar montiert ist und dazu konfiguriert ist, in einer ersten Drehrichtung und in einer zweiten Drehrichtung bewegt zu werden und die Bewegung des zweiten Flansches (401) gegenüber dem ersten Flansch (400) zu bewirken, und wobei das Eingangselement (402) des Gelenkmechanismus oder die Eingangselemente (402) der Gelenkmechanismen durch eine Steuerstange (5) angetrieben werden, die mit dem Eingangselement des Gelenkmechanismus oder den Eingangselementen (402) der Gelenkmechanismen drehgekoppelt ist, wobei die Steuerstange (5) um eine Längsachse der Stange schwenkbar montiert ist und wobei die Vorrichtung eine Steuer- und Verriegelungsvorrichtung (6) außerhalb des Gelenkmechanismus/der Gelenkmechanismen (4) umfasst, die dazu konfiguriert ist, die Steuerung des oder der Gelenkmechanismen (4) bei Änderung der Neigung der Rückenlehne gegenüber der Sitzfläche und, wenn die Steuer- und Verriegelungsvorrichtung (6) nicht betätigt wird, die Irreversibilität des oder der Gelenkmechanismen durch Blockieren der Drehung der Steuerstange (5) zu gewährleisten, wobei die Steuer- und Verriegelungsvorrichtung Folgendes umfasst:
- ein erstes Element (600), das ein Nachläufer und mit der Steuerstange (5) drehfest verbunden ist, und ein zweites Element (601), das ein Mitnehmer und mit einem begrenzten Winkelhub gegenüber dem ersten Element um die Steuerstange (5) schwenkbar montiert ist, und wobei das erste Element (600) und das zweite Element (601) erste Anschlagmittel (B1), die dazu konfiguriert sind, den Drehantrieb des ersten Elements (600), das ein Nachläufer ist, durch das zweite Element (601), das ein Mitnehmer ist, entsprechend der ersten Drehrichtung an einem ersten Ende des Drehhubs des zweiten Steuerelements (601) gegenüber dem ersten Element (600) zu gewährleisten, und zweite Anschlagmittel (B2), die dazu konfiguriert sind, den Drehantrieb des ersten Elements, das ein Nachläufer ist, durch das zweite Element, das ein Mitnehmer ist, entsprechend der zweiten Drehrichtung an einem zweiten Hubende des zweiten Steuerelements gegenüber dem ersten Steuerelement zu gewährleisten, umfassen,
- elastische Mittel (ME), die in einer zwischen dem ersten Hubende und dem zweiten Hubende liegenden Ruheposition (PR) das zweite Element (601) gegenüber dem ersten Element (600) hinsichtlich einer Drehung beschränken,
- ein Blockierelement (602), das um die Achse der Steuerstange drehfest mit dem ersten Element (600) verbunden und gegenüber dem ersten Element (600) in einer axialen Richtung (Dx) zur Achse der Steuerstange (5) verschiebbar ist, wobei es Führungsmittel (G1, G2) zwischen dem Blockierelement (602) und dem ersten Element (600) nachfolgt, wobei das Blockierelement (602) dazu konfiguriert ist, an einem festen Träger (603), der gegenüber dem ersten Flansch (400) gemäß der ersten Möglichkeit fixiert zu sein, oder an einem festen Träger (603), der gegenüber dem zweiten Flansch (401) gemäß der zweiten Möglichkeit fixiert ist, in einer Blockierposition des Blockierelements (602) unter Einwirkung einer Rückstellkraft von Federmitteln (MR) einzurasten, um die Drehfeststellung der Steuerstange (5) in der Ruheposition (PR) des zweiten Elements (601) gegenüber dem ersten Element (600) zu gewährleisten,
- Nockenmittel (C1, C2) zwischen dem zweiten Element (601) und dem Blockierelement, die dazu konfiguriert sind, das Blockierelement (602) axial gegen die Rückstellkraft der Federmittel (MR) aus der Blockierposition (PB) bis zu mindestens einer eingefahrenen Position (PE) zu verschieben, in der das Blockierelement (602) zumindest teilweise von dem festen Träger (603) beabstandet ist, wodurch die Drehung der Steuerstange (5) zumindest in der durch das zweite Element (601), das ein Mitnehmer ist, vorgegebenen Drehrichtung freigegeben wird, wobei das Blockierelement (602) axial eingefahren ist, wenn sich das zweite Element (601) und das erste Element (600) in der ersten Endposition des Hubes befinden, wenn sie gemäß der ersten Drehrichtung angetrieben werden, und wenn sich das zweite Element (601) und das erste Element (600) in der zweiten Endposition des Hubes befinden, wenn sie gemäß der ersten Drehrichtung angetrieben werden.

2. Vorrichtung nach Anspruch 1, wobei der feste Träger (603) eine um die Längsachse der Steuerstange (5) zentrierte Öffnung (Ov) aufweist, wobei die Öffnung (OV) an einem Innendurchmesser mit einer Vielzahl von Zähnen (d) versehen ist, gegen die das Blockierelement (602) in verschiedenen abgestuften, durch die Zähne definierten Verriegelungswinkelpositionen um die Achse der Steuerstange (5) in der Blockierposition (PB) einrastet.

3. Vorrichtung nach Anspruch 2, wobei die Vielzahl von Zähnen (d), die am Innendurchmesser der Öffnung (OV) ausgebildet sind, einen inneren Zahnkranz bilden, wobei die Zähne nach innen zur Achse der Steuerstange gerichtet sind, wobei das Blockierelement (602) einen äußeren Zahnkranz mit nach außen gerichteten Zähnen (D) umfasst.

4. Vorrichtung nach Anspruch 2 oder 3, wobei die Höhe der Zähne in axialer Richtung der Steuerstange zwischen 1 mm und 2 mm beträgt und der axiale Hub des Blockierelements (602) zwischen der Blockierposition (PB) und der eingefahrenen Position weniger als 3 mm oder sogar weniger als 2 mm beträgt.

5. Vorrichtung nach einem der Ansprüche 1 bis 4, wobei das erste Element (600) eine Öffnung (6000) mit nicht kreisförmigem Querschnitt aufweist, die komplementär zum Querschnitt der Steuerstange (5) ist und so konfiguriert ist, dass sie eine Drehkopplung des ersten Elements (600) mit der Steuerstange (5) gewährleistet, und wobei das erste Element (600) im Presssitz auf der Steuerstange (5) montiert ist.

6. Vorrichtung nach einem der Ansprüche 1 bis 5, wobei das Blockierelement (602) ein Körper ist, der zur Achse der Steuerstange (5) zentriert ist und eine zentrale Öffnung (6020) aufweist, die von einem äußeren Führungsbereich (6001) durchsetzt wird, der das erste Nachläuferelement (600) bildet, wobei die äußere Führungsbereich (6001) entlang der Achse der Steuerstange die Führungsmittel (G1, G2) umfasst, die erste Teile umfassen, die über den Umfang des äußeren Führungsbereichs (6001) verteilt sind, ihrer Länge nach entlang der axialen Richtung ausgerichtet sind, am Umfang des Bereich ein Relief aufweisen und zur Führung zusammenwirken, wobei zweite Teile mit komplementärem Relief am Innenumfang des Blockierelements (602) vorhanden sind, um eine translatorische Führung des Blockierelements (602) gegenüber dem ersten Element (600) in axialer Richtung, sowie eine Drehkopplung des Blockierelements (602) gegenüber dem ersten Element (600) um die Achse der Steuerstange (5) zu gewährleisten.

7. Vorrichtung nach Anspruch 6, wobei die ersten Teile der Führungsmittel (G1, G2) parallel zueinander verlaufende, über den Umfang des äußeren Führungsbereichs (6001) verteilte Rippen (N1, N2) umfassen und die zweiten in diese eingreifenden Teile Rillen (R1 R2) am Innenumfang des Blockierelements (602) umfassen.

8. Vorrichtung nach Anspruch 6 oder 7, wobei die Federmittel (MR) ein kreisförmiges Federelement umfassen, das von dem äußeren Führungsbereich (6001) durchsetzt wird und zwischen einerseits einer Anschlagfläche (6003) eines sich radial über einen Außendurchmesser des am ersten Element (600) ausgebildeten, äußeren Führungsbereichs (6001) hinaus erstreckenden Absatzes und andererseits einer ersten Wand (6021) des Blockierelements (602), die der Anschlagfläche (6003) zugewandt ist, zusammengedrückt wird.

9. Vorrichtung nach Anspruch 8, wobei dem die Anschlagfläche (6003) bildende Absatz einerseits und dem äußere Führungsbereich (6001) des ersten Elements (600), der sogenannte erste äußere Führungsbereich (6001), andererseits ein zweiter zylindrischer äußerer Führungsbereich (6002) des ersten Elements (600) als Verlängerung des ersten äußeren Führungsbereichs (6001) nachfolgen, wobei der zweite äußere Führungsbereich (6002) dazu konfiguriert ist, mit einem inneren Führungsbereich (6010), der an einer zentralen Öffnung des zweiten Elements (601) ausgebildet ist, zusammenzuwirken, um eine Drehführung des zweiten Elements (601) gegenüber dem ersten Element (600) entsprechend dem begrenzten Winkelhub um die Achse der Steuerstange (5) zu gewährleisten.

10. Vorrichtung nach den Ansprüchen 7 und 9, wobei sich zumindest ein Teil der Rippen (N2) in axialer Richtung der Steuerstange (5) bis zu deren distalem Ende bis zum Übergangsbereich zwischen einerseits dem ersten äußeren Führungsbereich (6001) und dem zweiten äußeren Führungsbereich (6002) erstrecken, wobei die Rippen (N2) an ihrem distalen Ende mit Anschlagflächen (FN2) enden, die in Anschlag mit einer Innenwand des zweiten Elements (601) zusammenwirken, wobei ein definierter Abstand zwischen der Anschlagfläche (6003) des Absatzes des ersten Elements (600) einerseits und der Innenwand des zweiten Elements (601), die der Anschlagfläche (6003) zugewandt ist, beibehalten wird.

11. Vorrichtung nach Anspruch 9 oder 10, wobei ein Haltering (604) an dem zweiten äußeren Führungsbereich (6002) befestigt ist, der dazu konfiguriert ist, anliegend mit einer Außenfläche des zweiten Elements (601) zusammenzuwirken.

12. Vorrichtung nach einem der Ansprüche 1 bis 11, wobei die Nockenmittel (C1, C2) mindestens ein Paar Nocken, die von dem Blockierelement (602) getragen werden, und einen Nockennachläufer (SC), der von dem zweiten Element (601) getragen wird, oder umgekehrt umfassen, wobei das oder jedes Nockenpaar einen ersten Nocken (C1), der eine Rampe bildet, die dazu konfiguriert ist, mit dem Nockennachläufer (SC) zusammenzuwirken, wodurch die Bewegung des Blockierelements (602) von der Blockierposition (PB) in die eingefahrene Position (PE) am ersten Ende des Hubs zwischen dem zweiten Element und dem ersten Element gewährleistet wird, und einen zweiten Nocken (C2), der eine Rampe bildet, die dazu konfiguriert ist, mit dem Nockennachläufer (SC) zusammenzuwirken, wodurch die Bewegung des Blockierelements (602) von der Blockierposition (PB) in die eingefahrene Position am zweiten Ende des Hubs zwischen dem zweiten Element und dem ersten Element gewährleistet wird, umfasst.

13. Vorrichtung nach den Ansprüchen 8 und 12, wobei sich der Nockennachläufer (SC) in der Ruheposition (PR) des zweiten Elements (601) gegenüber dem ersten Element (600) in einer Zwischenposition zwischen dem ersten Nocken (C1) und dem zweiten Nocken (C2) befindet, wobei das kreisförmige Federelement nicht nur die Federmittel (MR) bildet, die die Bewegung des Blockierelements (602) von der eingefahrenen Position (PE) in die Blockierposition (PB) beschränken, sondern auch die elastischen Mittel (ME), die die Bewegung des zweiten Elements gegenüber dem ersten Element vom ersten Ende des Hubs bis zur Ruheposition durch die Arbeit des Nockennachläufers mit der ersten Nocke beschränken und indem die Bewegung des zweiten Elements gegenüber dem ersten Element vom zweiten Ende des Hubs bis zur Ruheposition durch die Arbeit des Nockennachläufers mit der zweiten Nocke beschränkt wird.

14. Vorrichtung nach Anspruch 7 oder 10 in Kombination mit Anspruch 13, wobei der Nockennachläufer vom zweiten Element (601) und das mindestens eine Nockenpaar (C1, C2) vom Blockierelement (602) getragen wird und wobei die ersten Anschlagmittel (B1), die die Bewegung des zweiten Elements (601) gegenüber dem ersten Element (600) in der ersten Drehrichtung begrenzen, eine erste Anschlagfläche (SCB1) des Nockennachläufers (SC) umfassen, die dazu konfiguriert ist, mit einer der Rippen (N2) an einem distalen Ende der den ersten Nocken (C1) bildenden Rampe in Anschlag zu kommen, und wobei die zweiten Anschlagmittel (B2), die die Bewegung des zweiten Elements (601) gegenüber dem ersten Element (600) in der zweiten Drehrichtung begrenzen, eine zweite Anschlagfläche (SCB2) des Nockennachläufers (SC) umfassen, die dazu konfiguriert ist, mit einer der Rippen (N2) an einem distalen Ende der den zweiten Nocken (C2) bildenden Rampe in Anschlag zu kommen.

15. Vorrichtung nach einem der Ansprüche 1 bis 14, wobei das erste Element (600) und das zweite Element (601) ein Gehäuse bilden, in dem das Blockierelement (602) und die Federmittel (MR) untergebracht sind, und wobei der feste Träger (603) ein dünnes Element ist, das zwischen dem ersten Element und dem zweiten Element angeordnet ist und wobei die Steuer- und Verriegelungsvorrichtung (6) Folgendes umfasst:
- Mittel zum Zentrieren des festen Trägers (603) gegenüber der Achse der Steuerstange, umfassend zylindrische Führungsflächen (GC) zwischen dem festen Träger (603) einerseits und dem ersten Element (600) und/oder zweiten Element (601) andererseits,
- Mittel zum Feststellen des festen Trägers (603) gegenüber der Anordnung aus erstem Element (600) und zweitem Element (601), wobei der feste Träger (603), der zwischen dem ersten Element (600) und dem zweiten Element (601) angeordnet ist, auf gegenüberliegenden Anschlagflächen (SA) gehalten wird, die jeweils zum zweiten und ersten Element (601, 600) gehören, um den Anschlag des festen Trägers (603) gegenüber der Anordnung in der axialen Richtung der Steuerstange (5) zu gewährleisten.

16. Vorrichtung nach einem der Ansprüche 1 bis 15, wobei der Gelenkmechanismus (4) ein stufenloser Gelenkmechanismus ist, der ein Hypozykloidengetriebe umfasst, das den ersten Flansch (400) mit dem zweiten Flansch (401) verbindet, wobei das Hypozykloidengetriebe Folgendes umfasst:
- einen ersten äußeren Zahnkranz (CR1), der zu einer ersten Achse (Y1) zentriert und am ersten Flansch (400) ausgebildet ist;
- einen zweiten inneren Zahnkranz (CR2), der zu einer zur Steuerstange (5) koaxialen zweiten Achse (Y2) zentriert ist, wobei die zweite Achse (Y2) parallel zur ersten Achse und gegenüber der ersten Achse (Y1) um einem Exzenternocken (Ex) versetzt ist, wobei der zweite Zahnkranz (CR2) am zweiten Flansch (401) ausgebildet ist und einen Innendurchmesser aufweist, der größer ist als der Außendurchmesser des ersten Zahnkranzes (CR1),
- wobei der Exzenternocken (Ex) um die zweite Achse (Y2) drehbar montiert ist und mit dem Eingangselement (402) zusammenwirkt, das um die zweite Achse (Y2) drehbar gelagert ist, wobei das Eingangselement dazu konfiguriert ist, den Exzenternocken um die zweite Achse (Y2) drehend in der ersten Richtung oder in der zweiten Richtung mitzunehmen, wodurch die Bewegung des zweiten Flansches (401) gegenüber dem ersten Flansch (400) gemäß einer durch das Getriebe vorgegebenen hypozykloiden Bewegung gewährleistet wird.

17. Kraftfahrzeugsitz, umfassend eine Sitzfläche und eine Rückenlehne, sowie eine Vorrichtung nach einem der Ansprüche 1 bis 16, umfassend einen oder mehrere Gelenkmechanismen, wobei entsprechend der ersten Möglichkeit der erste Flansch (400) an der Sitzfläche (2) befestigt ist und der zweite Flansch an der Rückenlehne (3) befestigt ist oder umgekehrt entsprechend der zweiten Möglichkeit der erste Flansch (400) an der Rückenlehne befestigt ist und der zweite Flansch (401) an der Sitzfläche befestigt ist.

## Claims

1. Equipment for adjusting the inclination of a backrest (3) relative to a squab (2) of a seat (1) comprising one or more continuous joint mechanisms (4), said or each joint mechanism (4) comprising:
- a first flange (400) and a second flange (401) configured to be fixed to the squab (2) and to the backrest (3), respectively and according to a first possibility, or conversely fixed to the backrest (3) and to the squab (2), respectively, according to a second possibility;
- an input member (402), rotatably mounted, configured to be moved in a first direction of rotation and in a second direction of rotation, and to cause the movement of the second flange (401) relative to the first flange (400), and wherein said input member (402) of the joint mechanism, or said input members (402) of the joint mechanisms, are driven by a control rod (5), coupled in rotation with the input member of the joint mechanism, or said input members (402) of the joint mechanisms, the control rod (5) pivotably mounted about a longitudinal axis of the rod, and wherein said equipment comprises a control and locking device (6), external to the joint mechanism(s) (4), configured to ensure the control of the joint mechanism(s) (4) when changing the inclination of the backrest relative to the squab, and the irreversibility of the joint mechanism(s) by blocking in rotation of the control rod (5) when the control and locking device (6) is not actuated, the control and locking device comprising:
- a first follower member (600), secured in rotation with the control rod (5), and a second driving member (601), pivotably mounted according to a limited angular stroke relative to the first member around the control rod (5), and wherein said first member (600) and the second member (601) comprise first stop means (B1) configured to ensure the rotating of the first follower member (600) by the second driving member (601), according to the first direction of rotation, in a first end of rotation stroke of the second control member (601) relative to the first member (600), and second stop means (B2) configured to ensure the rotating of the first follower member by the second driving member, according to the second direction of rotation, at a second stroke end of the second control member with respect to the first control member,
- elastic means (ME) constraining the second member (601) in rotation relative to the first member (600) in a rest position (PR), intermediate between the first stroke end and the second stroke end
- a blocking element (602) secured in rotation with the first member (600) about the axis of the control rod, movable relative to the first member (600) in a direction axial (Dx) to the axis of the control rod (5) following guide means (G1, G2) between said blocking element (602) and the first member (600), said blocking element (602) being configured to be locked on a fixed support (603), fixed with respect to the first flange (400) according to the first possibility, or on a fixed support (603), fixed with respect to the second flange (401) according to the second possibility, in a blocking position of the blocking element (602), under the action of a return force of spring means (MR) in order to ensure the immobilization in rotation of the control rod (5) in the rest position (PR) of the second member (601) with respect to the first member (600),
- cam means (C1, C2) between the second member (601) and said blocking element, configured to move said blocking element (602), axially against the return force of the spring means (MR), from the blocking position (PB) to at least one retracted position (PE) for which said blocking element (602) is separated from the fixed support (603), at least partially, releasing the rotation of the control rod (5) at least in the direction of rotation imposed by the second driving member (601), said blocking element (602) being retracted axially, when the second member (601) and the first member (600) are in the first stroke end position, when driven in the first direction of rotation, and when the second member (601) and the first member (600) are in the second stroke end position, when driven in the second direction of rotation.

2. Equipment according to claim 1, wherein the fixed support (603) comprises an opening (Ov), centered around the longitudinal axis of the control rod (5), said opening (OV) provided on an internal diameter with a plurality of teeth (d) against which the blocking element (602) is locked according to different discontinuous angular locking positions defined by the teeth, about the axis of the control rod (5), in said blocking position (PB).

3. Equipment according to claim 2, wherein the plurality of teeth (d) formed on the internal diameter of the opening (OV) form an internal ring gear, with teeth oriented internally toward the axis of the control rod; said blocking element (602) comprises an external ring gear comprising with an externally oriented toothing (D).

4. Equipment according to claim 2 or 3, wherein the height of the toothing, in the direction axial to the control rod, is between 1 mm and 2 mm, and is such that the axial stroke of said blocking element (602) between the blocking position (PB) and the retracted position is less than 3 mm, or even less than 2 mm.

5. Equipment according to one of claims 1 to 4, wherein the first member (600) comprises an opening (6000) of non-circular section complementary to the section of the control rod (5), configured to ensure a rotational coupling of the first member (600) with the control rod (5) and wherein the first member (600) is mounted in a tight fit on the control rod (5).

6. Equipment according to one of claims 1 to 5, wherein said blocking element (602) is a body, centered on the axis of the control rod (5), having a central opening (6020) passed through by an external guide bearing surface (6001) formed the first follower member (600), said external guide bearing surface (6001) comprising, along the axis of the control rod, said guide means (G1, G2) comprising first parts distributed over the periphery of the outer guide bearing surface (6001), oriented lengthwise in the axial direction, in relief on the circumference of the bearing surface, and cooperating in guiding with complementary second parts in relief on the inner periphery of said blocking element (602), so as to ensure translational guidance of said blocking element (602) with respect to said first member (600) in the axial direction, as well as coupling in rotation of said blocking element (602) with respect to the first member (600) about the axis the control rod (5).

7. Equipment according to claim 6, wherein the first parts of the guide means (G1, G2) comprising mutually parallel ribs (N1, N2), distributed over the circumference of the outer guide bearing surface (6001) and the mutually engaging second parts comprise grooves (R1 R2) on the inner periphery of the blocking element (602).

8. Equipment according to claim 6 or 7, wherein the spring means (MR) comprise a circular spring member, passed through by said outer guide bearing surface (6001) compressed between, on the one hand, a stop face (6003) of a shoulder extending radially beyond an external diameter of the outer guide bearing surface (6001) formed on the first member (600), and on the other hand, a first wall (6021) of said blocking element (602), facing the stop face (6003).

9. Equipment according to claim 8, wherein the shoulder forming the stop face (6003), on the one hand, and the outer guide bearing surface (6001) of said first member (600), called first outer guide bearing surface (6001), on the other hand, are followed by a cylindrical second outer guide bearing surface (6002) of said first member (600), in the extension of the first outer guide bearing surface (6001), said second outer guide bearing surface (6002) being configured to cooperate with an inner guide bearing surface (6010) formed on a central opening of said second member (601) to ensure the rotational guidance of said second member (601) with respect to the first member (600) according to the limited angular stroke about the axis of the control rod (5).

10. Equipment according to claims 7 and 9, wherein at least in part ribs (N2) extend, in the axial direction of the control rod (5), up to their distal end as far as the junction zone between, on the one hand, the first outer guide bearing surface (6001) and the second outer guide bearing surface (6002), said ribs (N2) terminating at their distal ends by stop faces (FN2) cooperating in abutment with an inner wall of the second member (601) while maintaining a defined spacing between the stop face (6003) of said shoulder of the first storm member (600), on the one hand, and said inner wall of said second member (601) facing the stop face (6003).

11. Equipment according to claim 9 or 10, wherein a retaining ring (604) is fixed on the second outer guide bearing surface (6002), configured to cooperate in abutment with an outer face of the second member (601).

12. Equipment according to one of claims 1 to 11, wherein the cam means (C1, C2) comprise at least a pair of cams carried by said blocking element (602) and a cam follower (SC) carried by said second member (601), or conversely, the or each pair of cams comprising a first cam (C1) forming a ramp configured to cooperate with said cam follower (SC) by ensuring the movement of said blocking element (602) from the blocking position (PB) to the retracted position (PE) in the first stroke end between the second member and said first member, and a second cam (C2) forming a ramp configured to cooperate with said cam follower (SC) by ensuring the movement of said blocking element (602) from the blocking position (PB) to the retracted position in the second stroke end between the second member and said first member.

13. Equipment according to claims 8 and 12, wherein said cam follower (SC) is in an intermediate position between the first cam (C1) and the second cam (C2) in the rest position (PR) of the second member (601) relative to the first member (600), the circular spring member not only forming said spring means (MR) constraining the movement of said blocking element (602) from the retracted position (PE) to the blocking position (PB), but also the elastic means (ME) constraining the movement of the second member relative to the first member, from the first stroke end to the rest position by the work of the cam follower with the first cam and constraining the movement of the second member relative to the first member from the second stroke end to the rest position by the work of the cam follower with the second cam.

14. Equipment according to claim 7 or 10 in combination with claim 13, wherein the cam follower is carried by the second member (601) and said at least one cam pair (C1, C2) is carried by said blocking element (602), and wherein the first stop means (B1) limiting the movement of the second member (601) relative to the first member (600) in the first direction of rotation comprise a first of a stop face (SCB1) of the cam follower (SC), configured to come into abutment against one of the ribs (N2) at a distal end of the ramp forming the first cam (C1), and wherein the second stop means (B2) limiting the movement of the second member (601) relative to the first member (600) in the second direction of rotation comprise a second stop surface (SCB2) of the cam follower (SC), configured to come into abutment against one of the ribs (N2) at a distal end of the ramp forming the second cam (C2).

15. Equipment according to one of claims 1 to 14, wherein the first member (600) and the second member (601) forming a casing housing said blocking element (602) and said spring means (MR) and wherein the fixed support (603) is a thin element, inserted between the first element and the second element, and wherein the control and locking device (6) comprises:
- means for centering said fixed support (603) with respect to the axis of the control rod, comprising cylindrical guide surfaces (GC), between said fixed support (603), on the one hand, and said first member (600) and/or said second member (601), on the other hand,
- means for immobilizing said fixed support (603), with respect to the assembly of the first member (600) and second member (601), said fixed support (603) interposed between the first element (600) and the second element (601) held in opposite stop surfaces (SA) respectively belonging to the second member and the first member (601, 600) in order to ensure the stopping of the fixed support (603) with respect to said assembly in the axial direction of the control rod (5).

16. Equipment according to one of claims 1 to 15, wherein the joint mechanism (4) is a continuous joint mechanism comprising a hypocycloidal gear connecting the first flange (400) to the second flange (401), said hypocycloidal gear comprising:
- a first outer ring gear (CR1), centered on a first axis (Y1) and formed on the first flange (400);
- a second inner ring gear (CR2), centered on a second axis (Y2), coaxial with the control rod (5), the second axis (Y2) being parallel to the first axis and offset with respect to the first axis (Y1) by an eccentric cam (Ex), said second ring gear (CR2)) being formed on the second flange (401) and having an internal diameter greater than the external diameter of the first ring gear (CR1),
- said eccentric cam (Ex) rotatably mounted about the second axis (Y2) cooperating with the input member (402), which is pivotably mounted about the second axis (Y2), the input member being configured to drive the eccentric cam in rotation about the second axis (Y2), in the first direction or in the second direction, thus ensuring the movement of the second flange (401) relative to the first flange (400) according to a hypocycloidal movement imposed by the gear.

17. Motor vehicle seat comprising a squab and a backrest, as well as equipment according to one of claims 1 to 16, comprising one or more joint mechanisms, the first flange (400) secured to the squab (2) and the second flange secured to the backrest (3) according to the first possibility, or conversely the first flange (400) secured to the backrest and the second flange (401) secured to the squab according to the second possibility.
